# EUROPEAN PATENT SPECIFICATION

(11) **EP 4 294 953 B1**
(45) Date of publication and mention of the grant of the patent: **25.11.2026**
(21) Application number: 22756641.1
(22) Date of filing: 18.02.2022
(51) Int. Cl.: C21B 13/00, C21C 5/56

(54) **METAL OXIDE MATERIAL REDUCTION MEANS**
MITTEL ZUR REDUKTION VON METALLOXIDMATERIAL
MOYEN DE RÉDUCTION DE MATÉRIAU D'OXYDE MÉTALLIQUE

(30) Priority: 19.02.2021 SE 2150180
(43) Date of publication of application: 27.12.2023
(73) Proprietor: LUOSSAVAARA KIIRUNAVAARA AB, 971 28 Luleå (SE)
(72) Inventor: ERIKSSON, Ola, 981 33 Kiruna (SE); ÅSTRÖM, Björn, 981 37 Kiruna (SE); MARJAVAARA, Daniel, 981 37 Kiruna (SE); FJÄLLBORG, Örjan, 981 34 Kiruna (SE)
(74) Representative: Zacco Sweden AB
(86) International application number: PCT/SE2022/050182
(87) International publication number: WO 2022/177497

(56) References cited:
- GB-A- 2 532 689
- JP-A- 2006 002 193
- US-A- 3 615 351
- US-A- 3 635 456
- US-A- 3 645 717
- US-A1- 2015 259 760
- US-B1- 6 395 056
- US-B2- 7 175 690
- BHASKAR ABHINAV ET AL: "Decarbonization of the Iron and Steel Industry with Direct Reduction of Iron Ore with Green Hydrogen", ENERGIES, vol. 13, no. 3, 9 February 2020 (2020-02-09), CH, pages 1 - 23, XP093138443, ISSN: 1996-1073, DOI: 10.3390/en13030758

## Description

### TECHNICAL FIELD

The present invention relates to a method of reduction of metal oxide material according to claim 1 further relates to a metal material production configuration according to claim 20. The present invention further relates to a data medium storing a data program, programmed with a program code adapted for causing the metal material production configuration to execute an automatic or semi-automatic manufacture of reduced metal material.

The present invention concerns the mining industry and the metal material making industry providing reduced metal material. The present invention concerns metallurgical process industry producing industrial metals, such as sponge (e.g. sponge iron) or other types of reduced metal material. The present invention concerns manufacturers and suppliers of reduction facilities and of metal oxide material production units.

Especially, the present invention may concern steel making industries processing ferrous metals, such as steel. However, the present invention may concern various types of metal producers processing non-ferrous metals, such as aluminium, copper, lead and zinc.

At least one invention may relate to a direct reduction facility and may concern the industry producing reduced metal material and/or components for such facilities.

At least one invention may relate to a metal oxide material production unit and may concern the industry producing metal oxide material and/or components for such units.

### BACKGROUND

Reduced metal material is produced by direct reduction of metal oxide using a reducing gas for providing the reduction. Metal oxide material may be supplied continuously through the top of a direct reduction facility, such as a shaft furnace, while a hot blast of natural gas may be blown into the lower section of the direct reduction facility so that a chemical reaction takes place throughout the shaft furnace as the metal oxide material falls downward. Waste gas exits from the top of the direct reduction facility. The downward flow of the metal oxide material in contact with the up flow of heated natural gas, or other reducing agents, may be defined as a counter current exchange resulting in a chemical reaction between the metal oxide material and the heated natural gas.

Direct reduction of metal oxide material may also be subject to a fluidized bed direct reduction process. In such way, fine metal oxide material particles may be introduced into the direct reduction facility with pressurized fluid for providing free flow by gravity for achieving the chemical reaction and reduction of metal oxide material.

Known techniques, such as disclosed in patent document US 6 395 056 B1 or non-patent literature "Decarbonization of the Iron and Steel Industry with Direct Reduction of Iron Ore with Green Hydrogen" from BHASKAR ABHINAV ET AL (DOI: 10.3390/en13030758), use different ways to increase the temperature of the reducing agent, e.g. by addition of oxygen to initiate combustion of the reducing agent, for providing a chemical reaction between the metal oxide material and the reducing agent. However, such method of heating the reducing agent implies that the reducing agent loses its reduction strength. For compensating the loss of said reduction strength, the reducing agent may be additionally heated for providing the chemical reaction. However, further heating of the reducing agent would even more destroy the reduction strength of the reducing agent. An increased amount of the reducing agent may also be introduced into the direct reduction facility for compensating the destroyed reduction strength of the reducing agent. Nonetheless, further addition and heating of the reducing agent is not an efficient way to achieve a method of reduction of metal oxide material in a time-saving and cost-effective way.

The chemical reaction implies that oxygen is reduced from the metal oxide material by means of the heated reducing agent, whereby there will be a temperature rise of the metal oxide material. The metal oxide material may be heated in the prior art direct reduction facility, by means of a heated reducing agent, e.g. a syngas being a mixture of hydrogen gas and carbon monoxide, up to a temperature up to 800 °C, or in some cases up to 1200 °C by said chemical reaction.

The reduced metal material discharged from the direct reduction facility will thus be of high temperature and must be cooled after discharge, which ruins the energy efficiency of the manufacture of reduced metal material according to prior art.

Direct reduction of metal oxide material may be referred to as a solid-state process reducing the metal oxide material to a reduced metal material at a temperature below the melting point of the metal material.

### SUMMARY OF THE INVENTION

There is an object to provide a method of reduction of metal oxide material and a metal material production configuration using low energy consumption at the same time as CO₂- and NO_{X}-emissions are reduced or eliminated. The present invention is disclosed in appended claims 1-37.

There is an object to provide a method of reduction of metal oxide material and a metal material production configuration that promotes CO₂-free production of reduced metal material as an intermediate metal material for use in the production of commercial metals, such as steel, chrome, nickel, copper etc.

There is an object to provide an energy saving production of reduced metal material.

There is an object to provide a method of reduction of metal oxide material and a metal material production configuration that promotes CO₂-free production of reduced metal material, such as sponge iron, nickel briquettes, copper etc.

There is an object minimize utilization of the reducing agent for the reduction of metal oxide material in a direct reduction facility.

There is an object minimize utilization of electrical power required by an electrolysis unit producing hydrogen gas and oxygen gas.

There is an object to provide an environment friendly process to produce reduced metal material.

There is an object to maintain the reduction strength of the reducing agent during the reduction of the metal oxide material to reduced metal material.

There is an object to maintain the reduction strength and the reduction ability of the hydrogen containing gas used for the reduction of the metal oxide material holding thermal energy in the reduction facility, without the need of strongly heating/burning and/or heating the hydrogen containing gas with e.g. oxygen for combustion, which according to prior art reduces the reduction strength of the hydrogen containing gas, which in turn requires more hydrogen containing gas to be introduced and also results in excess of hydrogen in the top gas fed from the prior art reduction facility.

There is an object to maintain the chemical reactivity of the reducing agent and/or high impetus of the reducing agent, which chemical reactivity is essential for providing an efficient chemical reaction with the metal oxide material.

According to prior art, the reduction strength of the reducing agent deteriorates when the reducing agent is pre-heated for reaching an exothermal chemical reaction with the metal oxide material.

There is an object to provide a method of reduction of metal oxide material and a metal material production configuration that promotes time-saving production of the metal oxide material.

There is an object to provide a direct reduction facility that is cost-effective to build and that promotes cost-effective maintenance service and which facilitates straightforward and efficient charging of the metal oxide material into the direct reduction facility.

There is an object to provide a direct reduction facility that promotes direct and efficient charging of the metal oxide material into the direct reduction facility.

There is an object to provide a metal material production configuration and method of reduction of metal oxide material that promote the production of reduced metal material for use in a CO2-neutral and/or CO2-low emission and/or CO2 free fashion by an energy saving and time saving direct reduction of metal oxide material.

There is an object to provide a metal material production configuration and method of reduction of metal oxide material that promote efficient production of a carbon containing reduced metal material.

There is an object to provide a metal material production configuration and method of reduction of metal oxide material that promote an efficient and interconnected network of processes, within which energy and materials are used optimally and minor of waste products are produced in a sustainable supply chain management for the production of carbon-free or carbon containing reduced metal material and/or the production of metal.

This or at least one of said objects has been achieved by a method of reduction of a metal oxide material, produced by a metal oxide material production unit, the metal oxide material being transferred from the metal oxide material production unit into a direct reduction facility for charging the metal oxide material holding thermal energy that originates from a manufacturing thermal process of the metal oxide material production unit, the direct reduction facility is configured for introduction of a reducing agent adapted to react with the metal oxide material holding thermal energy, the method comprises the steps of: producing said metal oxide material; charging said metal oxide material, holding thermal energy, to the direct reduction facility; introducing the reducing agent to the direct reduction facility; reducing said metal oxide material to a reduced metal material by utilizing said thermal energy of the metal oxide material to heat or further heat the introduced reducing agent for achieving a chemical reaction; and discharging the reduced metal material from the direct reduction facility.

In such way there is preserved strong chemical reactivity of the reducing agent, which results in an efficient and time-saving reduction process, which in turn promotes time-saving production of reduced metal material.

Alternatively, the metal oxide material production unit provides (manufactures/produces/forms/generates) a metal oxide material holding thermal energy (e.g. a temperature of about 700 to 1400°C, preferably about 900 to 1200 °C or a temperature of about 800 to 1600°C, preferably about 900 to 1500 °C).

Alternatively, the metal oxide material is (e.g. directly) transferred from the metal oxide material pelletizing plant of the metal oxide material production unit and/or from a metal oxide material pre-heating apparatus of the metal oxide material production unit, into the direct reduction facility configured for charging the metal oxide material holding thermal energy that originates from the manufacturing thermal process of the metal oxide material pelletizing plant and/or of the metal oxide material pre-heating apparatus and/or a metal oxide material cooler/pre-heating apparatus of the metal oxide material production unit.

Alternatively, the direct reduction facility is provided with a heat-resistant supply apparatus, comprising a transfer device, such as a heat-resistant conveyor band or other suitable transfer member, electrically coupled to the control circuitry adapted to control the charging rate for charging the metal oxide material holding thermal energy into the reduction facility.

Alternatively, the manufacturing thermal process is adapted for producing the metal oxide material and comprises a step of indurating a metal ore mixture for producing the metal oxide material.

Alternatively, the step of indurating the metal ore mixture comprises a step of oxidation of the metal ore mixture and/or a step of sintering the metal ore mixture.

Alternatively, the manufacturing thermal process is adapted to provide the metal oxide material and comprises a step of pre-heating previously cooled down metal oxide material for producing the metal oxide material holding thermal energy.

Alternatively, the manufacturing thermal process is adapted to produce the metal oxide material holding thermal energy by pre-heating previously cooled down metal oxide material by means of the metal oxide material production unit, e.g. by means of the metal oxide material pre-heating apparatus and/or metal oxide material cooler/pre-heating apparatus.

Alternatively, the step of pre-heating the metal oxide material is preceded by a step of cooling the metal oxide material.

Alternatively, the metal oxide material, holding thermal energy that originates from the manufacturing thermal process (e.g. pre-heating of the metal oxide material by means of the metal oxide material pre-heating apparatus), is charged into the direct reduction facility.

Alternatively, the manufacturing thermal process is adapted for producing (providing) the metal oxide material.

Alternatively, the reducing agent (e.g. pure hydrogen gas), before being introduced into the direct reduction facility, is stored in a hydrogen storage and buffer tank.

Alternatively, the oxygen produced by the electrolysis unit, before feeding the oxygen to the metal oxide material production unit, is stored in an oxygen storage and buffer tank.

Alternatively, the hydrogen storage and buffer tank and/or the oxygen storage and buffer tank may be used for district heating or other energy users.

Alternatively, the metal oxide material being transferred from the metal oxide material production unit into the direct reduction facility when the thermal energy (heat energy), originating from the manufacturing thermal process, corresponds to a temperature above about 500°C.

Alternatively, the metal oxide material being transferred from the metal oxide material production unit into the direct reduction facility holds thermal energy (heat energy), originating from the manufacturing thermal process, corresponding to a temperature above about 900 °C.

Alternatively, the metal oxide material transferred from the metal oxide material production unit, configured to provide the metal oxide material holding thermal energy (e.g. from the metal oxide material pelletizing plant and/or from the metal oxide material pre-heating apparatus and/or from the metal oxide material cooler/pre-heating apparatus), into the direct reduction facility holds thermal energy corresponding to a temperature of about 700 °C to 1350 °C, preferably 800 °C to 1300 °C; or about 800 °C to 1350 °C, preferably 900 °C to 1350 °C.

Alternatively, the metal oxide material production unit produces a metal oxide material (agglomerates or pellets) holding a temperature of about 700 °C to 1300°C, preferably about 750 °C to 1150 °C.

Alternatively, the substantially or completely endothermal chemical reaction may consume thermal energy equivalent to about 300 °C to 700 °C, preferably about 450 °C to 550 °C, which energy is extracted from the metal oxide material charged into the direct reduction facility.

Alternatively, the metal oxide material production unit produces a metal oxide material (agglomerates or pellets) holding a temperature of about 900 °C to 1300 °C, preferably about 1000 °C to 1100 °C.

In such way is achieved that there is less need to heat the reducing agent for reaching a chemical reaction and reduction of the metal oxide material.

In such way is achieved that the reduction strength of the reducing agent will not be destroyed during the chemical reaction and reduction process.

In such way, there is no need to burn the reducing agent, e.g. by means of oxygen, for achieving a chemical reaction in the direct reduction facility.

In such way, there is less need to circulate the reducing agent in the interior of the direct reduction facility, for providing an optimal endothermal chemical reaction in the direct reduction facility. Such circulation would require further energy consumption according to prior art.

In such way, the chemical reactivity of the reducing agent is maintained.

Alternatively, the reducing agent comprises CO (Carbon monoxide) and/or H₂ (Hydrogen gas) and/or CxHy (Hydrocarbons), such as methane (CH₄) and/or propane (C₃H₈) and/or ethane (C₂H₆) and/or any other hydrocarbon group.

Alternatively, the reducing agent comprises more than 95% methane (CH4).

Alternatively, the reducing agent is pure hydrogen gas.

In such way there is achieved that the hydrogen gas used as a reducing agent, the reduction strength of which not will be destroyed.

In prior art, by adding or generating said thermal energy to said chemical reaction by heating/burning (as shown in prior art) the hydrogen by means of a burner (e.g. combustion with oxygen) for reaching e.g. very high temperature of the introduced hydrogen used by the chemical reaction and reduction process.

Alternatively, the reducing agent may be pre-heated to any temperature within the range of 20-700 °C (preferably about 100-600 °C) by means of a reducing agent pre-heating device.

Alternatively, the reducing agent pre-heating device is configured to pre-heat the reducing agent to such extent that the reduction strength of the reducing agent is not destroyed.

Alternatively, the reducing agent pre-heating device is electrically coupled to a control circuitry adapted to control (and/or monitor and/or adjust) the temperature of the reducing agent for efficient carburizing of the reduced metal material or metal oxide material subject to reduction.

Alternatively, the reducing agent having a hydrogen content of 75% to 100% by volume or preferably having a hydrogen content of 100% by volume.

Alternatively, the reducing agent pre-heating device comprises an electrical heater, indirect gas/gas heater etc.

Alternatively, the reducing agent comprises hydrogen gas.

In such way, due to the high reduction strength of the reducing agent, there is feasible to make use of a short or compact direct reduction facility or a short building of the direct reduction facility with a low positioned top section enabling straightforward and efficient charging of the pre-heated and/or heated and/or warm metal oxide material into the direct reduction facility.

Alternatively, the direct reduction facility may be formed as a shaft furnace, a rotary kiln, or a cross- or counter current heat exchanger or other direct reduction facility configured for reducing the metal oxide material.

Alternatively, the direct reduction facility may be configured to be operated under pressure.

Alternatively, the entire system of the direct reduction facility is subjected to overpressure.

Alternatively, the interior (e.g. a chamber) of the direct reduction facility, in which interior (chamber) the chemical reaction is performed, is subjected to overpressure (at a pressure higher than atmospheric pressure).

Alternatively, the overpressure is achieved by injecting the reducing agent into the direct reduction facility, whereas the reducing agent being pressurized.

Alternatively, the reducing agent is pressurized be means of a compressor device.

Alternatively, the reducing agent comprises hydrogen gas, which hydrogen gas is produced by the electrolysis unit configured to produce pressurized hydrogen gas.

Alternatively, the water to be decomposed by the electrolysis unit is pressurized before injected into the electrolysis unit for generating the pressurized reducing agent introduced into the interior of the direct reduction facility for providing said overpressure.

In such way there being achieved a compact direct reduction facility, less bulky fluid lines, and a cost-effective direct reduction facility.

Prior art techniques may use different types of reducing agents to be heated for providing a chemical reaction with the charged metal oxide material, such as an impure hydrogen gas extracted from fossil fuels, e.g. natural gas and partial oxidation of methane.

The hot reduced metal material produced by prior art reduction furnaces has to be cooled and excess heat would disappear into the atmosphere.

By charging the metal oxide material, holding said thermal energy, into the direct reduction facility, it is conceivably to provide a chemical reaction between the pre-heated and/or heated and/or hot and/or warm metal oxide material and the reducing agent without the need of heating the metal oxide material by means of the reducing agent.

In such way a metal material production configuration is achieved that promotes sustainable and energy saving method of reduction of a metal oxide material.

Alternatively, the chemical reaction may consume thermal energy equivalent to about 500 °C to 1300 °C, which energy is extracted from the metal oxide material, initially holding thermal energy from the metal oxide material production unit.

Alternatively, the direct reduction facility is configured as a counter current heat exchanger being adapted to cool the warm and/or pre-heated and/or heated (thermal energy) metal oxide material under reduction and subjected to the chemical reaction by means of the unheated and/or heated reducing agent.

In such way, the introduced reducing agent is heated, by the metal oxide material holding thermal energy, during the chemical reaction.

Alternatively, the discharged reduced metal material may have a temperature of about 20 °C to 500 °C.

Alternatively, the discharged reduced metal material may be subjected to carburizing, wherein the method of reduction of metal oxide material is controlled to produce reduced metal material of higher temperature, e.g. about 400 °C to 700 °C, preferably about 500 °C to 650 °C.

Alternatively, in case of carburizing the discharged reduced metal material, the introduced reducing agent may be pre-heated for adding the required temperature to the reduced metal material, but still the metal oxide material holds thermal energy being warmer than the reducing agent during the chemical reaction.

Alternatively, the thermal energy, of the metal oxide material to be reduced being provided by the process of producing the metal oxide material by the metal oxide material production unit.

Alternatively, the metal oxide material holding thermal energy is transferred from the metal oxide material production unit directly to the direct reduction facility in order to preserve thermal heat of the metal oxide material.

In such way heat saving is achieved at the same time as enhancement of chemical and physical metallurgical properties being provided regarding the metal oxide material and hence the reduced metal material.

In such way is achieved a cost-efficient method of reduction of a metal oxide material.

In such way is achieved that the dimensions of gas channel fans, gas channels and gas tubes can be optimized and less bulky, by making use of the thermal energy of the metal oxide material (in turn requiring less gas flows relative prior art).

In such way is achieved that the metal oxide material holding thermal energy will be charged in a state of being pre-heated and/or /heated and/or hot and/or warm metal oxide material into the direct reduction facility for enabling the chemical reaction.

Alternatively, the production of said metal oxide material comprises the following steps; grinding metal ore bodies; separating metal ore particles; producing a metal ore mixture of said metal ore particles; indurating the metal ore mixture.

Alternatively, the step of producing the metal ore mixture comprises a step of agglomerating the metal ore mixture.

Alternatively, the step of indurating the metal ore mixture further comprises heating and/or pre-heating of the metal ore mixture.

Alternatively, the step of indurating the metal ore mixture is preceded by a step of drying the metal ore mixture and/or pre-heating and/or heating the metal ore mixture.

According to present invention is achieved a sustainable method of reduction of a metal oxide material, whereas a common electrolysis unit can be used, both for producing the metal oxide material holding thermal energy, by means applying oxygen gas to the metal oxide material production unit, and for enabling the chemical reaction in the direct reduction facility by means of pure hydrogen gas.

Alternatively, the step of indurating the metal ore mixture comprises oxidation of the metal ore mixture and/or sintering of the metal ore mixture.

Alternatively, the step of transferring excess heat comprises providing additional heat for pre-heating and/or heating the metal ore mixture and/or indurating the metal ore mixture. In such way is achieved a metal oxide material production unit that may take advantage of using oxygen gas produced by an electrolysis unit, which electrolysis unit also is configured to produce pure hydrogen gas from water.

The reducing agent comprises a hydrogen gas generated by an electrolysis unit, wherein the method comprises the step of decomposing water into said hydrogen gas and into an oxygen gas.

Alternatively, the electrolysis unit uses electricity from hydropower, wind power, wave power or other fossil-free and renewable energy.

In such way is achieved a sustainable method of indurating the metal ore mixture by means of the oxygen gas produced by the electrolysis unit.

In such way is achieved that oxygen gas produced by the electrolysis unit can be used in an oxidation and combustion process provided by the metal oxide material production unit. Alternatively, the oxygen gas is transferred to the metal oxide material production unit for producing the metal oxide material.

Alternatively, the oxygen gas is transferred to the metal oxide material production unit to be used in a step of indurating and/or concentrating the metal ore mixture into a concentrate. Alternatively, the metal ore mixture comprises an iron ore mixture and the step of pre-heating and/or heating the iron ore mixture comprises oxidation of magnetite ore to hematite ore.

Alternatively, a step of oxidation of magnetite ore to hematite ore makes use of the application of oxygen gas fed from the electrolysis unit.

Alternatively, the transformation of the magnetite ore to hematite ore is performed in an oxygen environment into which oxygen gas may be fed from the common electrolysis unit.

Alternatively, the oxidation of the magnetite ore to the hematite ore, provided by an indurating apparatus of the metal oxide material production unit, generates thermal energy held by the metal oxide material being produced, which thermal energy is extracted and used in said substantially or completely endothermal chemical reaction provided by the direct reduction facility.

This will result in an energy saving production of the metal oxide material.

Alternatively, by the use of high content of magnetite ore in the metal ore mixture, it is possible to transform the magnetite ore to hematite ore by oxidation of Fe 2+ to Fe 3+ in the metal oxide material production unit per se, thus producing additional heat to be used by the metal oxide material production unit.

In such way is provided an energy carrying medium that can be used in the metal oxide material production unit for producing the metal oxide material holding thermal energy.

Alternatively, the step of indurating the metal ore mixture comprises a step of oxidation of the metal ore mixture and/or a step of sintering the metal ore mixture.

Alternatively, the method comprises a step of transferring excess heat from the electrolysis unit to the metal oxide material production unit.

Alternatively, the method comprises a step of transferring excess heat from the direct reduction facility to the metal oxide material production unit.

Alternatively, the step of transferring excess heat comprises providing additional heat in a step provided for pre-heating and/or heating the metal ore mixture and/or for producing a metal ore mixture of said metal ore particles and/or drying the metal ore mixture and/or pre-heating and/or heating the metal ore mixture; oxidation of the metal ore mixture; and sintering of the metal ore mixture.

In such way there is achieved a sustainable method and energy saving method for reducing a metal oxide material.

Alternatively, the oxygen gas is transferred from the electrolysis unit to the metal oxide material production unit to be used in a step of additionally heating (e.g. oxygen gas combined with combustion fuel) the excess heat.

In such way the excess heat transferred from the electrolysis unit and/or direct reduction facility is further heated in a sustainable and energy saving way.

Alternatively, a waste reduction fluid is transferred from the direct reduction facility to the metal oxide material production unit, which waste reduction fluid of the reducing agent being used for the manufacturing thermal process provided by the metal oxide material production unit.

Alternatively, a waste reduction fluid is transferred from the direct reduction facility to the metal oxide material production unit, which waste reduction fluid of the reducing agent being used for the manufacturing thermal process achieved by the metal oxide material pelletizing plant and/or by the metal oxide material pre-heating apparatus.

In such way, the production of the metal oxide material will be energy efficient by applying additional heat that originates from a waste reduction fluid discharged from the direct reduction facility, which waste reduction fluid is generated by the chemical reaction.

In such way there is achieved a sustainable method of drying the metal ore mixture by means of the oxygen gas (combined with combustion fuel) produced by the electrolysis unit and/or by means of applying additional heat that originates from heated waste reduction fluid discharged from the direct reduction facility generated by the chemical reaction.

Alternatively, the waste reduction fluid comprises water vapour and/or water steam generated by the chemical reaction and/or comprises a hydrogen gas that not reacted with the metal oxide material holding said thermal energy during the chemical reaction.

Alternatively, the hydrogen gas of the waste reduction fluid is transferred back to the direct reduction facility for reduction of the metal oxide material.

Alternatively, the hydrogen gas of the waste reduction fluid is fed through a heat exchanger apparatus before being transferred back to the direct reduction facility and/or to the metal oxide material production unit.

Alternatively, the water vapour and/or water steam of the waste reduction fluid is fed through the heat exchanger apparatus and is fed through a steam condenser apparatus configured to convert the water steam into water, which water is returned to the electrolysis unit.

Alternatively, a process gas (atmospheric gas) is transferred or fed through the heat exchanger apparatus in such way that the process gas will be heated, wherein the heated process gas is fed to the metal oxide material production unit for producing the metal oxide material holding thermal energy.

Alternatively, the waste reduction fluid of the reducing agent being used for pre-heating and/or heating the metal ore mixture and/or oxidation of the metal ore mixture and/or sintering the metal ore mixture.

Alternatively, the waste reduction fluid comprises hydrogen gas.

Alternatively, the waste reduction fluid comprises pure hydrogen gas.

Alternatively, the waste reduction fluid comprises water steam.

Alternatively, the waste reduction fluid comprises excessed (surplus) reducing agent and/or other obtained chemical compound during the chemical reaction.

This or at least one of said objects has been achieved by a metal material production configuration according to claim 20.

Alternatively, the metal oxide material production unit is configured for production of a metal oxide material holding thermal energy by a manufacturing thermal process, such as pre-heating of the metal oxide material by means of a metal oxide material pre-heating apparatus of the metal oxide material production unit.

Alternatively, the metal oxide material production unit comprises a charging device configured for charging the metal oxide material, holding said thermal energy, into the direct reduction facility.

Alternatively, the metal oxide material production unit is configured for production (manufacturing and/or generating) of a metal oxide material holding thermal energy by a manufacturing (and/or generating) thermal process, such as pre-heating of cooled down metal oxide material by means of the metal oxide material pre-heating apparatus.

Alternatively, the metal oxide material, holding thermal energy that originates from the pre-heating of the metal oxide material by means of the metal oxide material pre-heating apparatus, is charged into the direct reduction facility.

Alternatively, the manufacturing (and/or generating) thermal process is adapted for generating (producing) the pre-heated metal oxide material by means of the metal oxide material pre-heating apparatus, which pre-heated metal oxide material is charged into the direct reduction facility.

Alternatively, the direct reduction facility is configured to provide reduction of the metal oxide material to reduced metal material by utilizing thermal energy of the metal oxide material, which thermal energy originates from the manufacturing (and/or generating) thermal process, to heat or further heat the reducing agent for achieving a chemical reaction between the metal oxide material and the reducing agent providing said reduction.

Alternatively, the direct reduction facility is integrated with the metal oxide material production unit.

In such way is provided an integrated metal material production configuration, wherein pre-heated and/or heated and/or hot and/or warm metal oxide material, such as iron ore pellets or other agglomerate form, is (preferably directly) charged in the direct reduction facility for providing a chemical reaction, thereby reducing the energy consumption for production of reduced metal material, such as sponge iron. At the same time, by using hydrogen gas a reducing agent, there will be no CO₂-emissions in the production of reduced metal material. At the same time, by using fossil free energy for producing the hydrogen gas by means of the electrolysis unit, there will be no further CO₂-emissions. At the same time, the oxygen gas produced by the electrolysis unit is preferably used in the manufacturing thermal process of the metal oxide material production unit.

Alternatively, the direct reduction facility is integrated with the metal oxide material production unit and/or the electrolysis unit and/or a hydrogen storage unit and/or an oxygen storage unit and/or a metal making industry and/or a metal oxide material pelletizing plant and/or a metal oxide material pre-heating apparatus and/or a metal oxide material cooler/pre-heating apparatus and/or a steel mill industry and/or a minimill industry using a scrap metal melting electric arc furnace EAF and/or a carburizing reactor and/or a carburizing zone and/or a carbon source provider.

The above mentioned units, industries, the reactor(s), the zone(s), the apparatus(es), the site(s), the provider (s) etc. may form a single common production system and are interconnected to each other.

In such way is achieved Industrial Symbiosis that brings together a plurality of processes used for the production of metal oxide material, reduced metal material and metal (such as steel) promoting valorisation of effort to promote the valorisation of waste reduction fluid, improved hydrogen and oxygen efficiency, and reduction of environmental impact.

In such way is achieved a sustainable supply chain management of said processes.

In such way is achieved that by-products (e.g. thermal energy, hydrogen, oxygen etc.) produced by said processes become raw materials and supply for other users, allowing the by-products to be used in a sustainable way contributing to the reduction of greenhouse gas emissions.

In such way is provided an interconnected network of processes, within which energy and materials are used optimally and minor of waste products are produced. For example, waste hydrogen recovered from the direct reduction facility may be used for mining vehicles etc.

Alternatively, the carbon source provider comprises a carbon capture and utilization unit and/or a biogas production unit and/or a synthetic gas production unit.

Alternatively, the carbon-free reduced metal material or carbon containing reduced metal material constitutes a finished reduced metal material, such as a crude iron, an intermediate product, a pig iron or other intermediate products to be used by a metal producer, such as a steel producer. The finished reduced metal material may constitute material for producing steel slab or other semi-finished steel products. The finished reduced metal material may be prepared as e.g. steel billets to be used for further stages in metal casting etc.

Alternatively, the reduced metal material constitutes sponge iron in the form of Hot Briquetted Iron (HBI).

Alternatively, the direct reduction facility is part of an integrated Minimill, wherein the reduced iron after cooling is fed to an electric furnace of a steel production configuration.

By means of the direct reduction facility configured to provide reduction of the metal oxide material to reduced metal material by utilizing thermal energy of the metal oxide material, which thermal energy originates from the manufacturing thermal process, to heat or further heat the reducing agent for achieving a chemical reaction between the metal oxide material and the reducing agent providing said reduction, there is possible to make use of the high temperature (e.g. about 600 °C ) of the efficiently reduced metal material, wherein high pressure is applied to the reduced metal material for providing the HBI.

In such way, for example, the reduced iron ore material has a desired temperature of about 600 °C, at which desired temperature carburizing of the reduced iron ore material is most efficient.

Other products may be recovered from the method, such as nitrogen oxide, minerals, oxygen gas, phosphor etc.

Alternatively, the metal material production configuration comprises; an electrolysis unit configured to decompose water into a hydrogen gas and into an oxygen gas; and a hydrogen gas transfer device configured to transfer the hydrogen gas from the electrolysis unit to the reducing agent fluid inlet device, the reducing agent comprises said hydrogen gas.

Alternatively, the metal material production configuration comprises an oxygen gas transfer device configured to transfer the oxygen gas from the electrolysis unit to the metal oxide material production unit.

Alternatively, the hydrogen gas transfer device comprises a fluid transportation vehicle and/or a hose arrangement.

Alternatively, the direct reduction facility is integrated with the electrolysis unit.

Alternatively, the metal oxide material charging inlet device is configured for transferring the metal oxide material from the metal oxide material production unit directly into the direct reduction facility.

Alternatively, the metal oxide material charging inlet device comprises a refractory conveyor system.

Alternatively, the metal oxide agglomerate production unit comprises; a grinding apparatus configured to grind metal ore bodies; a separating apparatus configured to separate metal ore particles; a metal ore mixture producing apparatus configured to produce a metal ore mixture of said metal ore particles; and an indurating apparatus configured to indurate the metal ore mixture.

Alternatively, the indurating apparatus is configured for oxidation of the metal ore mixture and/or comprises a sintering apparatus configured for sintering the metal ore mixture and/or comprises a heating apparatus for heating the metal ore mixture.

Alternatively, a heat exchanger apparatus is coupled to the direct reduction facility via the waste reduction fluid outlet device, the heat exchanger apparatus is configured to transfer heat from a waste reduction fluid of the reducing agent, which waste reduction fluid is fed from the direct reduction facility to the metal oxide material production unit and/or the electrolysis unit, to heat an energy carrying fluid passing through the heat exchanger apparatus to the metal oxide material production unit.

Alternatively, the metal material production configuration comprises a reducing agent heating device configured for heating the reducing agent before being introduced into the direct reduction facility.

Alternatively, the waste reduction fluid outlet device of the direct reduction facility forming a waste gas outlet is arranged at a top section of the direct reduction facility.

Alternatively, the waste reduction fluid, such as water vapour and/or water steam and/or waste gases and/or hydrogen gas, may be defined as excess reduction fluid not used by the chemical reaction in a first stage and/or defined as an excess fluid produced by the chemical reaction.

Preferably, the waste reduction fluid may exhibit high temperature due to the chemical reaction.

Alternatively, the metal material production configuration comprises a pipe arrangement coupled between the direct reduction facility and the heat exchanger apparatus, the pipe arrangement further being coupled between the metal oxide agglomerate production unit and the heat exchanger apparatus.

Alternatively, the pipe arrangement is configured to transfer the waste reduction fluid, such as hydrogen gas, from the direct reduction facility to the metal oxide material production unit for pre-heating and/or heating the metal ore mixture and/or for indurating the metal ore mixture in the manufacturing thermal process.

Alternatively, the pipe arrangement is configured to transfer the waste reduction fluid, such as hydrogen gas, from the direct reduction facility back to the direct reduction facility for reuse of the waste reduction fluid in the substantially or completely endothermal chemical reaction.

Alternatively, the pipe arrangement is configured to transfer the waste reduction fluid, such as water steam, from the direct reduction facility to the heat exchanger apparatus.

Alternatively, the heat exchanger apparatus may comprise a steam condenser apparatus configured to convert the water steam into water.

Alternatively, the steam condenser apparatus is coupled to the electrolysis unit and is configured to deliver water converted from the water steam to the electrolysis unit.

Alternatively, the metal material production configuration comprises a control circuitry adapted to control any of the method steps.

This or at least one of said objects has been achieved by a data medium storing a data program, programmed for causing the metal material production configuration to execute an automatic or semi-automatic manufacture of reduced metal material, wherein said data program comprises a program code, the data medium is readable on a computer of the control circuitry, for causing the control circuitry to perform the method steps of: producing said metal oxide material by said the metal oxide material production unit; charging said metal oxide material, holding thermal energy, to the direct reduction facility; introducing the reducing agent to the direct reduction facility; reducing said metal oxide material to reduced metal material by utilizing said thermal energy of the metal oxide material to heat or further heat the introduced reducing agent for achieving a chemical reaction; and discharging the reduced metal material from the direct reduction facility.

This or at least one of said objects has been achieved by a data medium product comprising a data program and a program code stored on a data medium of the data medium product, said data medium is readable on a computer of the control circuitry, for performing the method steps, when the data program of the data medium is run on the computer.

### A direct reduction facility:

A common problem of prior art reduction facilities is that they do not make use of energy efficient production methods in the production of reduced metal material and do not reduce the CO₂-emissions in an optimal way in the production of reduced metal material.

There is an object to provide a method of production of reduced metal material and to provide a direct reduction facility adapted for reduced CO₂-emission and designed for efficient energy consumption in the production of reduced metal material.

This or at least one of said objects has been achieved by a direct reduction facility configured to be integrated with or configured to be coupled to a metal oxide material production unit (or positioned adjacent the metal oxide material production unit), enabling charging of a metal oxide material, holding thermal energy that originates from a manufacturing thermal process adapted for producing the metal oxide material, into the direct reduction facility, and the direct reduction facility is configured for receiving a reducing agent for providing a chemical reaction between the reducing agent and the metal oxide material, holding said thermal energy.

Alternatively, the direct reduction facility comprises; a metal oxide material charging inlet device, which is configured for transferring the metal oxide material from the metal oxide material production unit into the direct reduction facility; a reducing agent fluid inlet device configured for introducing the reducing agent, which is adapted to react with the metal oxide material, into the direct reduction facility; a reduction fluid outlet device configured for discharging waste reduction fluid from the direct reduction facility; and a reduced metal material outlet device configured for discharging the reduced metal material from the direct reduction facility.

Alternatively, the metal ore material and/or the metal oxide material being in the form of agglomerates, such as pellets or other suitable form.

In such way, by providing the metal ore mixture in the form of agglomerates, there is achieved open spaces between the metal ore mixture for providing an efficient induration process with or without oxidation in the metal oxide material production unit (such as a rotary kiln unit, a straight grate, or any other induration apparatus).

In such way, by providing the metal oxide material and/or the metal ore mixture in the form of agglomerates, there is achieved open spaces between the metal oxide material for providing an efficient reduction process in the direct reduction facility.

In such way is achieved, when the metal ore material being collected in an indurating apparatus of the metal oxide material production unit (such as a rotary kiln unit, a straight grate, or other oxidation and/or sintering apparatus) for oxidation of the metal ore material, that the open spaces provide efficient oxidizing process of the metal ore material.

In such way is achieved, when the metal oxide material (such as agglomerates) being collected in the direct reduction facility for reduction of the metal oxide material, that open spaces are provided between the agglomerates for providing an efficient reduction process.

Alternatively, a reducing agent supply is configured to feed the reducing agent to the direct reduction facility.

Alternatively, the reducing agent fluid inlet device is associated with and/or coupled to an electrolysis unit configured to decompose water into said reducing agent.

Alternatively, the reducing agent comprises a hydrogen gas.

Alternatively, the direct reduction facility is configured to produce a final reduced metal material having a temperature of about 15°C to 300°C, preferably about 100°C to 200°C.

Alternatively, the direct reduction facility is configured to produce a final reduced metal material having a temperature up to about 550°C.

Alternatively, the indurating apparatus is configured for sintering the metal ore mixture (e.g. in a grate-kiln unit) at a temperature of about 1200 °C to 1300 °C for producing the metal oxide material and for providing the required strength of the metal oxide material.

A metal oxide material production unit:
A common problem of prior art metal oxide material production units is that they do not make use of energy efficient production methods and do not reduce the CO₂-emissions in an optimal way in the production of a metal oxide material to be used in reduction facilities.

There is an object to provide a method of production of metal oxide material and a metal oxide material production unit adapted for reduced CO₂-emission and which a metal oxide material production unit being designed for efficient energy consumption in the production of the metal oxide material.

This or at least one of said objects has been achieved by a metal oxide material production unit configured to produce a metal oxide material from a metal ore mixture, wherein the produced metal oxide material holds thermal energy that originates from a manufacturing thermal process of the metal oxide material production unit, and the metal oxide material production unit is configured to transfer the metal oxide material holding thermal energy directly to a direct reduction facility configured to reduce the metal oxide material holding thermal energy into reduced metal material by introducing a reducing agent into the direct reduction facility.

Alternatively, the metal oxide material production unit is configured for heating the metal ore mixture by means of excess heat transferred from an electrolysis unit to the metal oxide material production unit, which electrolysis unit is configured to produce an oxygen gas and a hydrogen gas, the reducing agent comprises the hydrogen gas.

Alternatively, the metal oxide material production unit comprises a first oxygen gas discharge device configured to discharge oxygen gas to an indurating apparatus, which oxygen gas is fed from an electrolysis unit for heating a metal ore mixture in a combustion process and/or for oxidizing the metal ore mixture.

Alternatively, the metal oxide material production unit comprises a second oxygen gas discharge device configured to discharge oxygen gas transferred from the electrolysis unit to the metal oxide material production unit for providing combustion for additionally heating process gas fed from a heat exchanger apparatus to the metal oxide material production unit.

Alternatively, the metal oxide material production unit comprises a hydrogen gas discharge device configured to discharge hydrogen gas transferred from an electrolysis unit providing burning and/or combustion and/or heating the metal ore mixture, wherein the manufacturing thermal process may comprise a step of indurating the metal ore mixture, and/or wherein the manufacturing thermal process comprises a step of sintering the metal ore mixture.

Alternatively, the metal oxide material production unit comprises a first oxygen gas discharge device configured to discharge oxygen gas transferred from an electrolysis unit, wherein the manufacturing thermal process comprises burning of said oxygen gas (e.g. combined with combustion fuel).

Alternatively, the metal oxide material production unit produces metal oxide material holding a temperature of about 900°C to 1300°C, preferably about 950°C to 1200 °C.

Alternatively, the metal oxide material production unit produces metal oxide material holding a temperature higher than a temperature of about 800°C.

Alternatively, the metal oxide material production unit comprises a second oxygen gas discharge device configured to discharge oxygen gas transferred from an electrolysis unit, wherein the manufacturing thermal process comprises a step of pre-heating and/or heating the metal ore mixture by oxidation of magnetite ore to hematite ore.

In such way is achieved that oxygen gas produced by the electrolysis unit efficiently being used in the manufacture of reduced metal material.

Alternatively, the metal oxide material may constitute metal oxide agglomerates,

Alternatively, the metal oxide material may constitute iron oxide agglomerates.

Alternatively, the metal oxide material may constitute chrome oxide agglomerates.

Alternatively, the metal oxide material production unit may constitute a metal oxide agglomerate production unit.

Alternatively, the metal oxide material production unit may constitute an iron oxide agglomerate production unit.

Alternatively, the metal oxide material production unit may constitute a chrome oxide agglomerate production unit.

The use of hot and/or warm charging of the metal oxide material holding said thermal energy, into the direct reduction facility, provides a great advantage in that the reducing agent at steady state does not need to be pre-heated but is heated by the metal oxide material (charged hot and/or warm metal oxide material), whereby the metal oxide material under reduction would be cooled during the reduction (chemical reaction).

Alternatively, the indurating apparatus provides a sintering process that may distinguish between heating and oxidation.

Alternatively, the oxidation may take place with oxygen-enriched process gas maintaining high oxygen pressure during the metal oxide material production process (pelletizing) and/or for carrying heat.

The oxygen-enriched process gas may be important for increasing the oxidation rate and for providing operational control of heat release to the metal oxide material production.

Alternatively, the metal material production configuration comprises a feeding line (not shown) configured to feed oxygen deficient process gas to the grate furnace device for drying and/or pre-heating and/or heating the metal ore mixture.

By means of discharging oxygen deficient process gas to the drying and pre-heating unit configured to pre-heat the metal ore mixture (e.g. green pellets) there is provided that the metal ore mixture is hindered from oxidization and is hindered from generating excess heat before entering an indurating apparatus.

In such way there is achieved that magnetite ore being hindered to oxide in the pre-heating zone, whereby low-grade heat can be used for pre-heating and saving of the oxidation heat subsequently to the oxidation zone for oxidation of the metal ore mixture.

Alternatively, subsequently the grate furnace device, the metal ore mixture (e.g. green pellets) being subjected to oxygen-enriched process gas fed into the rotary kiln unit for oxidization of the metal ore mixture (green pellets) into metal oxide material (agglomerates) holding thermal energy originating from the manufacturing thermal process of the metal oxide material production unit.

In such way is achieved an efficient way to save energy by delaying the oxidation during the drying and/or pre-heating and/or heating of the metal ore mixture and subsequently enrichment of oxygen during the oxidization.

In such way is achieved a time saving manufacturing thermal process at the same time as the exhaust gas generated by the manufacturing thermal process will be decreased (e.g. such as excess nitrogen).

By means of discharging the oxygen gas (and/or oxygen-enriched process gas) into the induration apparatus configured for oxidization (and/or sintering) of the metal ore mixture (e.g. green pellets), there is provided that the metal ore mixture is subjected to an oxidization process, which is enhanced and/or strengthened by the oxygen gas discharged into the induration apparatus.

By providing the metal ore mixture in the form of agglomerates, there is achieved open spaces between the agglomerates, which spaces promotes an efficient oxidization of the metal ore mixture.

In such way is achieved controlled oxidization of the metal ore mixture for providing a metal oxide material.

In such way is achieved enhanced heat production by said oxidization process.

In such way is achieved cost-effective and time saving production of metal oxide material.

In such way is achieved optimized oxidation of magnetite ore to hematite ore.

Alternatively, the reducing of the metal oxide material to a reduced metal material by utilizing said thermal energy of the metal oxide material to heat or further heat the introduced reducing agent for achieving an endothermal chemical reaction or a substantially endothermal chemical reaction or a fully endothermal; and/or an exothermal chemical reaction and/or a substantially exothermal chemical reaction and/or partial exothermal chemical reaction.

The endothermal reaction may be described as a chemical reaction that absorbs thermal energy from the metal oxide material. The exothermal reaction may be described as a chemical reaction that releases thermal energy.

An example of said chemical reaction is as follows:

3Fe₂O₃ + H₂ → 2Fe₃O₄ + H₂O + heat (weakly exothermal)

Fe₃O₄ + H₂ → 3FeO + H₂O - heat (endothermal)

FeO+ H₂ → Fe + H₂O - heat (endothermal)

The finished reduced metal material thus being achieved by e.g. that the iron ore Fe₂O₃ is reduced to sponge iron Fe, i.e. the reduced metal material is ready for transport to the iron making industry.

An example of said chemical reaction is as follows:

3Fe₂O₃ + CO → 2Fe₃O₄ + CO2 + heat (exothermal)

Fe₃O₄ + CO → 3FeO + CO2 - heat (endothermal)

FeO+ CO → Fe + CO2 + heat (exothermal)

The wording "direct reduction facility" may be changed to "shaft furnace", "direct reduction furnace", "kiln", "oven", etc.

The wording "metal oxide material production unit" may be changed to "straight grate plant", "grate kiln plant", "combined sorting and concentration plant", "pelletizing plant", "combined sorting and concentration plant", "agglomerate production unit", "pellets machine", "metal oxide material pelletizing plant", "metal oxide material pre-heating apparatus" or "pellets production site" etc.

The metal oxide material production unit may comprise a metal oxide material pelletizing plant and/or a metal oxide material pre-heating apparatus and/or a metal oxide material cooler/pre-heating apparatus.

The word "reduced" may be changed to the wording "direct reduced".

The expression "reduction strength" may be changed to the expression "reduction potential".

The wording "metal oxide material" may be changed to "agglomerated metal oxide material", "metal oxide pellets", "metal oxide briquettes" or "metal oxide marble-sized pellets " or just "agglomerates".

Agglomerates of the metal oxide material may have an average diameter of about 1 mm to 25 mm, preferably about 5 mm to about 16 mm or any other suitable dimension.

Each dimension of the agglomerates that have been charged into the direct reduction facility is of such value, that the reducing agent enables to pass through and in between the agglomerates for providing an effective and time saving reduction between the reducing agent and the charged metal oxide material.

The wording "metal ore mixture" may be changed to "agglomerated metal ore mixture", "metal ore pellets", "green metal ore pellets", "metal ore briquettes" or "metal ore marble-sized balls" or just "agglomerates" or "metal ore slurry" or "metal ore concentrate" or "concentrate".

The feeding member, feeding device, feeding arrangement, feeding element may comprise gas lines and/or fluid pipes and/or any type transferring means configured to transfer fluid in the form of gas, liquid or solid substance and may comprise fans and/or pumps or other fluid driving means and may comprise valve devices for controlling the flow of fluids.

The wording "manufacturing thermal process" may refer to any manufacturing process that involves production of metal oxide material, wherein the manufacturing process results in metal oxide material that holds thermal energy and the manufacturing thermal process uses heat for indurating the metal ore mixture into metal oxide material and/or generates heat to the produced metal oxide material.

The wording "metal oxide material" may mean a metal ore or iron ore that has been subject to oxidation and/or sintering and which comprises other elements and/or minerals than iron, such as natural alloy elements or minerals of less quantity not constituting alloys.

The wording "metal ore mixture" may mean a metal ore or iron ore that has been prepared into a slurry and or "green" pellets ready to be indurated into metal oxide material.

The wording "reduced metal material" may mean an intermediate product comprising carburized or carbon free reduced metal material.

The wording "iron ore" may mean iron ore including introduced additives such as quartzite, lime, olivine, different binders etc. for providing an efficient process.

The wording "reduced metal material" may be replaced by the wording "direct reduced metal material".

The valve devices, fans and pumps may be coupled to the control circuitry configured for controlling the flow of fluids.

Alternatively, the waste reducing fluid being re-used in a substantially or completely endothermal chemical reaction with a metal oxide material holding said thermal energy.

Alternatively, the wording "manufacturing thermal process" may refer to any manufacturing process that involves pre-heating of previously cooled down metal oxide material by means of a metal oxide material pre-heating apparatus or a metal oxide material cooler/pre-heating apparatus.

Alternatively, the metal oxide material production unit comprises a metal oxide material pelletizing plant and/or a metal oxide material pre-heating apparatus for providing said thermal energy originating from the (metal oxide material) manufacturing/producing/forming/generating thermal process provided by the metal oxide material production unit.

Alternatively, the metal oxide material pre-heating apparatus may be configured as a metal oxide material cooler/pre-heating apparatus.

This has been solved by a metal oxide material production unit configured to produce, by induration of a metal ore mixture or by pre-heating previously cooled down metal oxide material, a metal oxide material holding thermal energy.

Alternatively, the metal oxide material production unit comprises a metal oxide material discharge outlet configured to discharge the metal oxide material holding thermal energy from the metal oxide material production unit.

Alternatively, the induration comprises an oxidation and/or sintering process of the metal ore mixture being performed with oxygen-enriched process gas maintaining high oxygen pressure during the oxidation and/or sintering process of the manufacturing thermal process.

Alternatively, a heated process gas constitutes an oxygen deficient process gas fed to a drying and/or pre-heating unit of a metal oxide material production unit.

Alternatively, the waste reducing fluid comprising hydrogen gas is fed back to the direct reduction facility wherein the metal material production configuration comprises a feeding element configured for feeding the waste reducing fluid back to the direct reduction facility.

Alternatively, the waste reduction fluid of the reducing agent being used for pre-heating and/or heating the metal ore mixture and/or the process gas in the indurating process.

Alternatively, the metal oxide material production unit comprises a burner device, for example a hydrogen burner.

Alternatively, a waste reduction fluid of the reducing agent is fed from a waste reduction fluid supply being used for pre-heating and/or heating the metal ore mixture and/or the oxygen-enriched process gas and/or the oxygen deficient process gas used in the induration process.

Alternatively, a burner device, for example a hydrogen burner device, of the metal oxide material production unit, is configured for induration and/or heating the metal ore mixture and/or by pre-heating previously cooled down metal oxide material, for providing a metal oxide material holding thermal energy.

Alternatively, the direct reduction facility is configured to produce a carbon-free reduced metal material and/or a carbon containing reduced metal material.

Alternatively, the carbon containing reduced metal material is obtained by a separate carburizing reactor coupled to the direct reduction facility and/or a separate carburizing zone of the direct reduction facility and/or a carburizing volume of the interior of the direct reduction facility.

The present disclosure or disclosures may not be restricted to the examples described above, but many possibilities to modifications, or combinations of the described examples thereof should be apparent to a person with ordinary skill in the art without departing from the basic idea as defined in the appended claims. For example, the direct reduction facility may in some applications be positioned at a distance or remote from the metal oxide material production unit. However, the thermal energy of the metal oxide material, which thermal energy originating from said manufacturing thermal process provided by the metal oxide material production unit preferably being used by said chemical reaction. However, the thermal energy of the metal oxide material is still of such value that it is possible to heat or further heat the reducing agent for achieving said chemical reaction.

### BRIEF DESCRIPTION OF THE DRAWINGS

The present invention will now be described by way of examples with references to the accompanying schematic drawings, of which:
Fig. 1 illustrates a metal material production configuration according to prior art;
Fig. 2 illustrates a metal material production configuration according to a first example;
Fig. 3 illustrates a metal material production configuration according to a second example;
Fig. 4 illustrates a metal material production configuration according to a third example;
Fig. 5 illustrates a metal material production configuration according to a fourth example;
Fig. 6 illustrates a direct reduction facility according to an example;
Fig. 7 illustrates a metal material production configuration according to a fifth example;
Fig. 8 illustrates a metal material production configuration according to a sixth example;
Fig. 9 illustrates a metal material production configuration according to a seventh example;
Fig. 10 illustrates a flowchart showing an exemplary method of reduction of metal oxide material,
Fig. 11 illustrates a flowchart showing an exemplary method of reduction of metal oxide material,
Fig. 12 illustrates a control circuitry of a metal material production configuration according to a further example,
Figs. 13a-13d illustrate exemplary modes of a metal oxide material cooler/pre-heating apparatus;
Figs. 14a-14d illustrate exemplary aspects of a metal oxide material production unit;
Figs. 15a-15b illustrate examples of an integrated metal material production configuration; and
Fig. 16 illustrates an example of a metal oxide material production unit of a metal material production configuration.

### DETAILED DESCRIPTION

Hereinafter, exemplary embodiments of the present invention will be described with reference to the accompanying drawings, wherein for the sake of clarity and understanding of the invention some details of no importance may be deleted from the drawings.

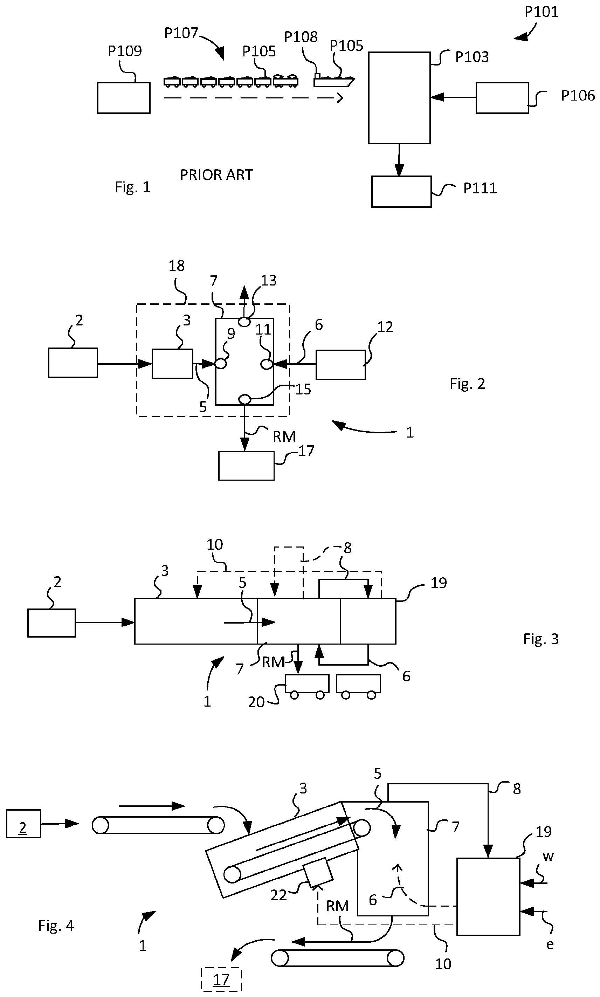

Fig. 1 illustrates a metal material production configuration P101 according to prior art. The prior art metal material production configuration P101 comprises a reduction furnace P103 that is configured for reduction of metal oxide material P105. The metal oxide material P105 is transported by train P107 and/or by waterborne transport P108 from a metal oxide material production unit P109, configured to produce the metal oxide material P105, to the reduction furnace P103. A reducing agent (not shown), produced by a reducing agent supply P106, is introduced into the reduction furnace P103. The reducing agent is heated, so that a chemical reaction between the metal oxide material and the heated reducing agent is achieved. The heating of the reducing agent will destroy the reduction strength of the reducing agent whereby the reduction process will be time-consuming and may require additional re-circulation of the reducing agent and additional heating. This will imply an even more energy consumption. The finished reduced metal material RM is transported to a metal making industry P111.

Fig. 2 illustrates a metal material production configuration 1 according to a first example. Metal ore is transported from a metal ore mine 2 (such as an iron ore mine) to a metal oxide material production unit 3 of the metal material production configuration 1, wherein the metal oxide material production unit 3 is configured for production of a metal oxide material 5. The metal oxide material 5 holds thermal energy provided by a manufacturing thermal process, comprising e.g. oxidation and sintering processes, performed by the metal oxide material production unit 3. The metal oxide material 5, holding thermal energy from the manufacturing thermal process, is transferred into a direct reduction facility 7 in such way that the metal oxide material 5 maintains said thermal energy (for example fully maintaining the thermal energy or substantially maintaining the thermal energy or to an extent of 50-90% maintaining the thermal energy), when being charged into the direct reduction facility 7 for providing the chemical reaction between a reducing agent and the metal oxide material.

Alternatively, the metal oxide material 5 holds thermal energy corresponding to a temperature between about 850 °C to about 1300 °C, preferably between about 1000 -1250 °C, when being charged (transferred) into the direct reduction facility 7.

The metal oxide material 5, holding thermal energy that originates from the manufacturing thermal process performed by the metal oxide material production unit 3, is charged into the direct reduction facility 7. The direct reduction facility 7 is configured for introduction of the reducing agent 6, such as pure hydrogen gas or other suitable reducing agent, produced by a reducing agent production plant 12. The reducing agent 6 is adapted to react with the metal oxide material 5 holding said thermal energy.

Alternatively, the metal oxide material 5 is reduced into reduced metal material RM by utilizing said thermal energy of the metal oxide material 5 to heat the introduced reducing agent 6 for achieving a substantially or completely endothermal chemical reaction and/or a completely substantially or completely endothermal chemical reaction between the reducing agent 6 and the metal oxide material.

The direct reduction facility 7 comprises a metal oxide material charging inlet device 9 (e.g. a first opening), which is configured for transferring (pass-through) the metal oxide material 5 from the metal oxide material production unit 3 into the direct reduction facility 7.

The direct reduction facility 7 further comprises a reducing agent fluid inlet device 11 configured for introducing the reducing agent 6 into the direct reduction facility 7.

Alternatively, the reducing agent is adapted to react in a substantially or completely endothermal chemical reaction with the metal oxide material 5 holding said thermal energy.

Alternatively, the reducing agent is adapted to react in a partial exothermal chemical reaction with the metal oxide material 5 holding said thermal energy.

Alternatively, the reducing agent is adapted to react by a substantially or completely endothermal and by a minor exothermal chemical reaction with the metal oxide material 5 holding said thermal energy, which exothermal chemical reaction precedes or follows the substantially or completely endothermal chemical reaction during the reduction of the metal oxide material.

Alternatively, the reducing agent is adapted to react in a substantially or completely endothermal and/or exothermal chemical reaction with the metal oxide material 5 holding said thermal energy provided by said manufacturing thermal process, which substantially or completely endothermal chemical reaction absorbs a first energy content from the metal oxide material 5, and which exothermal chemical reaction releases a second energy content, wherein the first energy content is larger than the second energy content.

Alternatively, the reducing agent is adapted to absorb the first energy content to initiate and maintain the chemical reaction.

Alternatively, the first energy content is 95-99% of the total energy content and the second energy content is 1-5% of the total energy content of the chemical reaction.

The direct reduction facility 7 further comprises a waste reduction fluid outlet device 13 configured for discharging waste reduction fluid, such as water steam and hydrogen gas, from the direct reduction facility 7.

The direct reduction facility 7 further comprises a reduced metal material outlet device 15 configured for discharging the reduced metal material RM from the direct reduction facility 7. The reduced metal material is transported to a metal making industry 17, such as a steel mill.

Alternatively, the direct reduction facility 7 is configured to provide direct reduction of the metal oxide material 5 to reduced metal material RM by utilizing said thermal energy of the metal oxide material 5 provided by said manufacturing thermal process, i.e. the thermal energy originating from the manufacturing thermal process, to heat the reducing agent for achieving the chemical reaction.

Alternatively, the direct reduction facility 7 is fully or partly integrated with the metal oxide material production unit 3 constituting an integrated reduced metal material production plant 18.

Fig. 3 illustrates a metal material production configuration 1 according to a second example. Metal ore is transported from a metal ore mine 2 to a metal oxide material production unit 3 of the metal material production configuration 1. The metal oxide material production unit 3 produces a metal oxide material 5 holding a thermal energy provided by a manufacturing thermal process performed by the metal oxide material production unit 3.

The manufacturing thermal process may comprise e.g. drying and pre-heating a metal ore mixture, oxidizing the metal ore mixture, and sintering the metal ore mixture in an indurating process.

The metal oxide material holding said thermal energy may be transferred directly into a direct reduction facility 7 for providing a chemical reaction with a reducing agent for direct reduction of the metal oxide material. The direct reduction facility 7 is configured to receive the reducing agent, e.g. a hydrogen gas 6, which is produced by an electrolysis unit 19 that may be integrated with the metal material production configuration 1.

Alternatively, the electrolysis unit 19 may be positioned remote from the direct reduction facility 7.

The chemical reaction generates a waste reducing fluid 8 being discharged from the direct reduction facility 7.

A chemical compound, such as the reducing agent, of the waste reducing fluid 8 may be transferred back to the direct reduction facility 7 to be used for said chemical reaction.

Water of the waste reducing fluid 8 may be transferred back to the electrolysis unit 19.

Alternatively, water vapour and/or water steam of the waste reduction fluid 8 is fed through a heat exchanger apparatus (not shown) and is fed through a steam condenser apparatus (not shown) configured to convert the water steam into water, which water is returned to the electrolysis unit 19.

Alternatively, the waste reducing fluid 8 (e.g. comprising hydrogen gas) is processed to be re-used in the chemical reaction with the metal oxide material 5 holding said thermal energy.

Alternatively, the waste reducing fluid 8 is processed to be used in the exothermal chemical reaction with the metal oxide material 5 holding said thermal energy.

The direct reduction facility 7 comprises a reduced metal material outlet device (not shown) configured for discharging the reduced metal material RM to a train 20 for transportation of the reduced metal material RM to a metal making industry (not shown). The direct reduction facility 7 is thus configured to provide reduction of the metal oxide material 5 to reduced metal material RM by utilizing said thermal energy of the metal oxide material 5, which thermal energy originates from said manufacturing thermal process, to heat the reducing agent for achieving said chemical reaction between the metal oxide material and the reducing agent for providing said reduction.

The electrolysis unit 19 is configured to decompose water into said hydrogen gas 6 and into an oxygen gas 10.

Alternatively, the oxygen gas 10 is transferred from the electrolysis unit 19 to the metal oxide material production unit 3 for providing said manufacturing thermal process performed by the metal oxide material production unit 3.

Fig. 4 illustrates a metal material production configuration 1 according to a third example. Metal ore (not shown) is transported from a metal ore mine 2 to a metal oxide material production unit 3.

The produced metal oxide material 5 is produced along an inclined production line of the metal oxide material production unit 3. The metal oxide material 5 holds thermal energy originating from a manufacturing thermal process made by the metal oxide material production unit 3. The metal oxide material 5 holding said thermal energy is transferred directly into a direct reduction facility 7 for providing a chemical reaction with a reducing agent. By using the thermal energy of the metal oxide material 5, the reduction strength of the reducing agent 6 will not be decreased. The reducing agent 6 may comprise pure hydrogen gas.

Prior art uses less effective systems making use of heating the metal oxide material 5 by means of a heated reducing agent. Such before-hand heating of a reducing agent takes away the reduction strength of the reducing agent.

The metal material production configuration 1 in Fig. 4 makes use of already heated metal oxide material for the chemical reaction. This will preserve the reduction strength of the reducing agent. In such way an efficient chemical reaction is achieved, which in turn promotes; cost-effective production, use of a compact direct reduction facility, compact gas supply lines, time saving production, precise control and monitoring of the production.

Such compact direct reduction facility 7 enables efficient charging of the metal oxide material 5, holding said thermal energy, through a top section of the direct reduction facility 7.

The metal oxide material 5 holding said thermal energy may thus be transferred and charged directly after its production into the direct reduction facility 7.

Alternatively, the metal oxide material 5 holding said thermal energy may be transferred into the direct reduction facility 7 after being cooled down to a lower temperature.

Alternatively, the direct reduction facility 7 may be positioned at a distance or remote from the metal oxide material production unit 3. However, the thermal energy of the metal oxide material 5, that originates from said manufacturing thermal process provided by the metal oxide material production unit 3, preferably being used by said chemical reaction. The thermal energy of the metal oxide material 5 is still of such value that it is possible to heat or further heat the reducing agent 6 for achieving said chemical reaction.

Alternatively, an electrolysis unit 19 is configured to decompose water w into pure hydrogen gas and an oxygen gas 10. The electrolysis unit 19 may be configured to use fossil free electricity e or alternatively substantially fossil free electricity e for the electrolysis. The pure hydrogen gas is introduced into the direct reduction facility 7 for providing a direct reduction of the metal oxide material 5 by said chemical reaction between the pre-heated and/or heated and/or warm metal oxide material 5 and the hydrogen gas 6.

Alternatively, the reducing agent may be pre-heated before being introduced into the direct reduction facility 7, wherein the introduced reducing agent may have a temperature of about 300 °C to about 700 °C, preferably about 400 °C to about 650 °C. The thermal energy of the metal oxide material 5 is still of such value that it is possible to heat or further heat the reducing agent 6 for achieving said chemical reaction.

A waste reducing fluid 8 comprising water steam and hydrogen gas being discharged from the direct reduction facility 7. The water steam is condensed into water and is transferred back to the electrolysis unit 19. The hydrogen gas is transferred back to the direct reduction facility 7 and being re-used for said chemical reaction. Hydrogen gas generated by the electrolysis unit 19 and/or from the waste reducing fluid may be used by the metal oxide material production unit 3 for production of the metal oxide material 5.

The oxygen gas 10 may be transferred to an indurating apparatus 22 of the metal oxide material production unit 3 for oxidation and/or sintering of the metal ore mixture 24 for producing the metal oxide material 5. The direct reduction facility 7 is configured to discharge a reduced metal material RM generated by said chemical reaction. The reduced metal material RM is transported to a metal making industry 17.

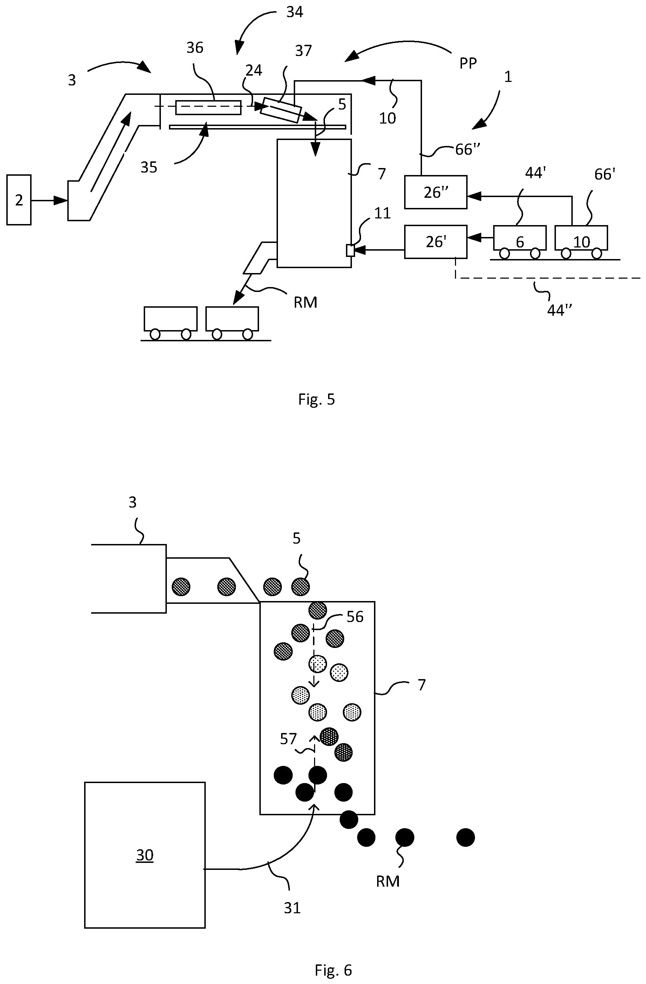

Fig. 5 illustrates a metal material production configuration 1 according to a fourth example. Metal ore is transported from a metal ore mine 2 to a metal oxide material production unit 3. A direct reduction facility 7 is positioned below the metal oxide material production unit 3 for promoting effective charging of metal oxide material 5 into the direct reduction facility 7. A remote electrolysis unit (not shown) produces a hydrogen gas 6 and an oxygen gas 10, which hydrogen gas 6 being transported by vehicles 44' and/or pipe lines 44" to a first storage tank 26' of the metal material production configuration 1.

The metal material production configuration 1 comprises an oxygen gas pipe 66" configured to transfer the oxygen gas 10 from a second storage tank 26", which oxygen gas 10 may be transported by vehicles 66' to the second storage tank 26" from the remote electrolysis unit (not shown). The oxygen gas 10 may be fed to the metal oxide material production unit 3 for indurating the metal ore mixture 24.

The metal oxide material production unit 3 may comprise a grate-kiln unit 34 of a pelletizing plant PP.

A grate furnace device 35 of the grate-kiln unit 34 may comprise a drying and pre-heating unit 36, which prepares the metal oxide mixture (e.g. green pellets) for heat treatment in a rotary kiln unit 37 of the pelletizing plant PP.

The rotary kiln unit 37 delivers high thermal energy to the metal ore mixture 24 and the produced metal oxide material 5 holds high thermal energy. The rotary kiln unit 37 sinters the metal oxide mixture (pellets) and provides additional mechanical strength to the pellets. The grate-kiln unit 34 may be a last processing unit of the metal oxide material production unit 3, before the pellets exit from the metal oxide material production unit 3 as a finished metal oxide material 5, ready to be charged into the direct reduction facility 7.

The grate furnace device 35 may be divided in four zones (not shown). In the first two zones, the metal ore mixture 24 (e.g. green pellets) are dried by hot air blown in from below a pellet bed (not shown). Subsequently the first two zones, the metal ore mixture 24 is transferred through a tempered pre-heat zone and through a pre-heat zone. These two last zones serve to increase the temperature of the metal ore mixture 24 (e.g. green pellets) prior to entering the rotary kiln unit 37.

Alternatively, the metal material production configuration 1 comprises a feeding line (not shown) configured to feed oxygen deficient process gas to the grate furnace device 35 for drying and/or pre-heating and/or heating the metal ore mixture 24.

Alternatively, subsequently the grate furnace device 35, the metal ore mixture (e.g. green pellets) being subjected to oxygen-enriched process gas fed into the rotary kiln unit 37 for oxidization of the metal ore mixture (green pellets) into metal oxide material 5 (agglomerates) holding thermal energy originating from the manufacturing thermal process of the metal oxide material production unit 3.

In such way is achieved an efficient way to save energy by delaying the oxidation during the drying and/or pre-heating and/or heating of the metal ore mixture 24 and subsequently enrichment of oxygen during the oxidization.

In such way is achieved a time saving manufacturing thermal process at the same time as the exhaust gas generated by the manufacturing thermal process will be decreased (such as nitrogen).

In the grate furnace device 35, which may be the largest processing unit of the grate-kiln unit 34 (e.g. a length of 50-60 meters), the metal ore mixture 24 is dried and pre-heated by means of hot and/or warm process gas heated in a heat exchanger (not shown) by a waste reducing fluid (not shown) fed from the direct reduction facility 7.

Alternatively, the heated process gas constitutes an oxygen deficient process gas fed to the drying and pre-heating unit 36 of the metal oxide material production unit 3.

In such way is achieved that the metal ore material 24 is prevented from being oxidized in the tempered pre-heat zone and in the pre-heat zone of the grate furnace device 35.

In such way is achieved that the oxygen content of the metal ore mixture 24 can be controlled for regulating a thermal energy rise in the sintering and/or oxidation process performed in the rotary kiln unit 37.

Alternatively, for providing an efficient sintering and/or oxidation of the metal ore mixture in the rotary kiln unit 37, an oxygen-enriched process gas is fed into the rotary kiln unit 37. The oxygen-enriched process gas is important for increasing the oxidation rate and for providing operational control of heat release in the metal oxide material production.

Alternatively, the oxygen-enriched process gas comprises heated process gas mixed with oxygen gas.

Alternatively, the oxygen gas is transferred from an electrolysis unit (not shown).

In such way the oxidation rate of the oxidization of the metal ore material (e.g. the pellets) is increased in the rotary kiln unit 37.

Alternatively, the metal ore mixture comprises magnetite, whereby a major part of the oxidation of the metal ore mixture provided by the rotary kiln unit 37 makes use of oxidizing magnetite to hematite.

By using the oxygen gas produced by an electrolysis unit (also producing hydrogen gas used in the direct reduction facility 7) there are achieved several advantages. For example, fossil free energy may be used for production of the hydrogen gas and the oxygen gas from water, controlled oxidation of the metal ore mixture in a controllable way, time-saving and energy efficient production of the metal oxide material 5, etc.

Alternatively, for providing an efficient sintering and/or oxidation of the metal ore mixture in the grate-kiln unit, pure oxygen gas 10 may be fed into the rotary kiln unit 37.

Fig. 6 illustrates a direct reduction facility 7 according to an example. A metal oxide material production unit 3 produces metal oxide material 5, which e.g. holds a temperature of about 900 °C to 1300 °C, preferably about 950 °C to 1250 °C when being discharged from the metal oxide material production unit 3.

The metal oxide material 5 may be in the form of metal ore pellets or other suitable agglomerates. The metal oxide material 5 is charged from the metal oxide material production unit 3 directly into a direct reduction facility 7, whereas the metal oxide material 5 still holds thermal energy from the production process achieved by the metal oxide material production unit 3. A reducing agent supply 30 is coupled to the direct reduction facility 7 and is configured to supply a reducing agent 31 to the direct reduction facility 7.

A downward flow 56 of the metal oxide material of high temperature (said thermal energy) contacts an up flow 57 of the reducing agent 31. The reducing agent 31 exhibits lower temperature than that of the metal oxide material 5. The direct reduction facility 7 may be defined as a counter current heat exchanger and is configured to cool the high temperature incoming metal oxide material 5 under direct reduction, wherein is provided a substantially or completely endothermal chemical reaction by means of the unheated reducing agent.

Alternatively, the reduced metal material RM being discharged from the direct reduction facility 7 may have a temperature of about 50°C to 300°C, preferably 100 to 200°C.

Alternatively, the discharged reduced metal material RM may have a temperature within a range of about 20°C to 500°C.

Alternatively, the discharged reduced metal material RM may be subjected to carburizing, wherein the method of reduction of metal oxide material 5 is controlled to produce reduced metal material of higher temperature, e.g. about 400°C to 700°C, preferably about 500°C to 650 °C.

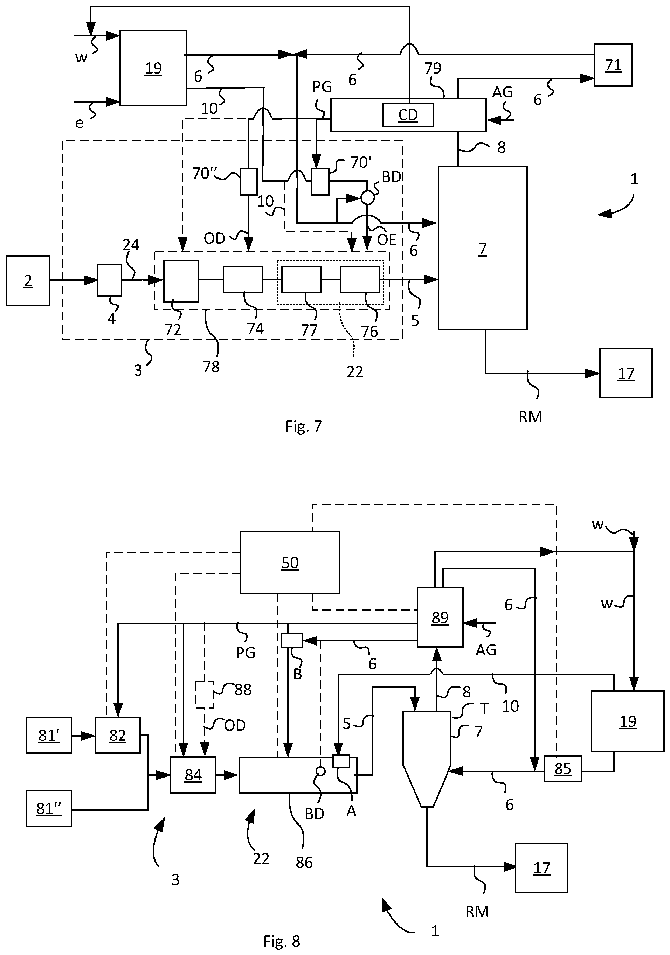

Fig. 7 illustrates a metal material production configuration 1 according to a fifth example. Metal ore is transported from a metal ore mine 2 to a sorting and concentration plant 4 of a metal oxide material production unit 3. The metal ore may be subjected to screening, crushing, separation, grinding, flotation processes and further separation may be provided by the sorting and concentration plant 4.

After the grinding, separation and flotation processes, various additives may be mixed into a metal ore mixture 24 or into a slurry. The metal ore mixture 24 may be filtered to a certain moisture content and impurities may be separated from the metal ore mixture 24 for increasing the metal content.

When the enrichment of metal content of the metal ore mixture 24 is completed, the metal ore mixture 24 is transferred to a pelletizing plant 78 of the metal oxide material production unit 3. In the pelletizing plant 78, a clay mineral may be added as a binder to the metal ore mixture 24, and subsequently an agglomerated metal ore mixture (e.g. so called "green" pellets) are formed in rotating drums (not shown). The metal ore mixture 24 may be dried 72 and pre-heated 74 for increasing the strength.

The pelletizing plant 78 may constitute a straight grate pelletizing plant or a grate-kiln pelletizing plant or any other type of pellets producing plant of the metal oxide material production unit, which metal oxide material production unit is configured to make use of agglomerated metal ore mixture in a manufacturing thermal process provided by the metal oxide material production unit 3 and/or produce agglomerated metal oxide material 5 to be charged into a direct reduction facility 7.

The agglomerated metal oxide material 5, holding thermal energy originating from the manufacturing thermal process, is transferred from the metal oxide material production unit 3 to the direct reduction facility 7.

Alternatively, the metal ore mixture comprises an iron ore mixture and the step of pre-heating and/or heating the iron ore mixture comprises oxidation of magnetite ore to hematite ore. In such a way, additional thermal energy is produced, as the magnetite oxidizes to hematite, whereby the energy demand is further reduced.

Alternatively, for providing an efficient sintering process and/or oxidation process of the metal ore mixture in an indurating apparatus 22, an oxygen-enriched process gas OE is fed into the indurating apparatus 22.

Alternatively, the reference 72 marks drying, the reference 74 (pre-heat zone) marks pre-heating, the reference 77 (oxidation zone) marks oxidation of the metal ore mixture, the reference 76 (sintering zone) marks sintering of the metal ore mixture 24.

In order to achieve that the agglomerated metal oxide material 5 will have satisfactory and proper final properties before charging, the agglomerated metal ore mixture 24 in the form of e.g. green pellets may be pre-heated at the tempered pre-heat zone 74 and oxidized at the oxidation zone 77 and/or sintered at the sintering zone 76.

The agglomerated metal ore mixture 24 thus being heated to such temperature in which the metal ore particles partially melt together forming the agglomerated metal oxide material 5, ready to be charged into the direct reduction facility 7. The sintering process may thus be combined with an oxidation process, wherein the agglomerated metal ore mixture may be sintered at about a temperature of about 1250 °C.

Alternatively, the metal ore mixture comprises hematite not making use of the oxidization reaction as provided by the magnetite ore mixture or green pellets made of magnetite ore. The oxygen-enriched process gas OE is important for increasing the oxidation rate and for providing operational control of the metal oxide material production unit 3.

The sintering process may distinguish between heating and oxidation. The oxidation may take place with the oxygen-enriched process gas OE maintaining high oxygen pressure during the manufacturing thermal process, i.e. during the oxidation and/or sintering process (induration) of the manufacturing thermal process.

Alternatively, the oxygen-enriched process gas PG comprises heated process gas PG that is injected with oxygen gas 10 at a mixing unit 70'. The heated process gas PG is generated by a heat exchanger 79 configured to transfer heat from a waste reducing fluid 8 discharged from the direct reduction facility 7 to an atmospheric gas AG.

Pure oxygen gas 10 may also be transferred to the indurating apparatus 22 of the metal oxide material production unit 3 for enabling efficient oxidation and/or sintering of a metal ore mixture 24.

Alternatively, the oxygen gas 10 is fed from an electrolysis unit 19, for example via a pipe line assembly (not shown). The electrolysis unit 19 is configured to decompose water w into a hydrogen gas 6 and the oxygen gas 10. The electrolysis unit 19 may use fossil free electricity e or in other ways produced electricity e. The hydrogen gas 6 is introduced into the direct reduction facility 7 for providing a direct reduction of the agglomerated metal oxide material 5 by means of a chemical reaction between the metal oxide material holding thermal energy and the hydrogen gas 6.

The waste reducing fluid 8 comprising hydrogen gas 6 and water steam is thus discharged from a top section of the direct reduction facility 7 into the heat exchanger 79 and a condensation device CD is configured to condensate the water steam of the waste reducing fluid 8 into water.

The hydrogen gas 6 is transferred via the heat exchanger 79 back to the direct reduction facility 7 and can be reused for said chemical reaction. A purification unit 71 may be coupled to the direct reduction facility 7 for purification of the hydrogen gas 6 of the waste reducing fluid 8.

Alternatively, the hydrogen gas 6 is also used for heating the oxygen-enriched process gas OE by means of a hydrogen gas burner device BD.

The heated process gas PG may be processed at 70" to comprise an oxygen deficient process gas OD fed to the tempered pre-heat zone 74 and/or oxidation zone 77 for preventing that the agglomerated metal ore material being oxidized before being transferred into the sintering zone 76 of the sintering unit.

Direct reduced metal material RM is discharged from the direct reduction facility 7 and is transported to a metal making industry 17.

Fig. 8 illustrates a metal material production configuration 1 comprising a metal oxide material production unit 3 according to a sixth example. Wet metal ore agglomerates 81' are dried at a drying station 82. The dried metal ore agglomerates 81' are transferred with already dry metal ore agglomerates 81" to a pre-heating station 84 of the metal oxide material production unit 3. Pre-heating is made for increasing the strength of the metal ore agglomerates. In order to give the metal ore agglomerates their final properties, they are sintered at a sintering station 86 (firing zone) of an indurating apparatus 22, wherein a metal oxide material 5 is discharged from the metal oxide material production unit 3. The metal ore agglomerates also may be oxidized by the indurating apparatus 22.

The produced metal oxide material 5 holds thermal energy essentially or fully generated in the indurating apparatus 22 and/or generated by the metal oxide material production unit 3. The agglomerated metal oxide material 5 holding said thermal energy is transferred from the indurating apparatus 22 to a direct reduction facility 7 configured to provide direct reduction of the agglomerated metal oxide material 5 holding said thermal energy.

An electrolysis unit 19 is configured to decompose water w into a hydrogen gas 6 and an oxygen gas 10. The electrolysis unit 19 preferably uses fossil free electricity or substantially fossil free electricity. The hydrogen gas 6 is introduced into the direct reduction facility 7 for providing said direct reduction of the agglomerated metal oxide material 5 by a chemical reaction between the metal oxide material 5 and the hydrogen gas 6.

A waste reducing fluid 8 comprising hydrogen gas 6 and water steam, is discharged from a top section T of the direct reduction facility 7. The hydrogen gas 6 is transferred via a heat exchanger 89 back to the direct reduction facility 7 and can be reused for said chemical reaction. The water steam is condensed be means of a condenser (not shown) into water, which is transferred back to the electrolysis unit 19. The oxygen gas 10 is transferred to the indurating apparatus 22 for said oxidation and/or sintering of the agglomerates. The oxidation rate of the oxidation of the agglomerates is increased by making use of the oxygen gas 10.

In such way is achieved a time-saving and stable production of metal oxide material making use of oxygen gas produced by the electrolysis unit 19.

The heat exchanger 89 transfers heat to an atmospheric gas AG from the waste reducing fluid 8. A produced heated process gas PG may be used for drying 82 and/or pre-heating in a pre-heating zone 84 and/or induration 22 of the metal ore agglomerates.

Preferably, the produced heated process gas PG may be processed at station 88 to comprise an oxygen deficient process gas OD, which is fed to the pre-heating zone 84 for preventing that the agglomerated metal ore material being oxidized before being transferred into the indurating apparatus 22.

The metal material production configuration 1 further comprises a control circuitry 50 adapted to control the production of the reduced metal material RM. A data medium storing a data program of the control circuitry 50 has been pre-programmed for causing the metal material production configuration 1 to execute an automatic or semi-automatic manufacture of the reduced metal material. The data program comprises a program code, applied by a computer for causing the control circuitry 50 to produce the metal oxide material by means of the metal oxide material production unit 3 and to charge the metal oxide material, holding thermal energy, to the direct reduction facility 7. The control circuitry 50 is configured to; introduce the reducing agent, such as the hydrogen gas 6, to the direct reduction facility 7; provide the reduction of the metal oxide material to reduced metal material by utilizing said thermal energy of the metal oxide material to heat the introduced reducing agent for achieving a chemical reaction; and to discharge the reduced metal material from the direct reduction facility 7. The control circuitry 50 may be configured to control the drying station 82, the pre-heating station 84, the indurating apparatus 22, the heat exchanger 89, and to regulate 85 the flow of hydrogen gas 6.

The metal oxide material production unit 3 further may comprise a first oxygen gas discharge device A configured to discharge the oxygen gas 10 into the indurating apparatus 22.

The sintering process may distinguish between heating and oxidation. The oxidation may take place with an oxygen-enriched process gas for maintaining high oxygen pressure during the metal oxide material production process. The oxygen-enriched process gas is also important for increasing the oxidation rate and for providing operational control of the metal oxide material production unit 3 by means of the control circuitry 50.

The metal oxide material production unit 3 may comprise a hydrogen gas discharge device B configured to burn the hydrogen gas 6 for further heating the process gas PG.

The metal oxide material production unit 3 may comprise a hydrogen gas burner BD arranged in the indurating apparatus 22.

Direct reduced metal material is discharged from the direct reduction facility 7 and is transported to a metal making industry 17, such as a steel making industry.

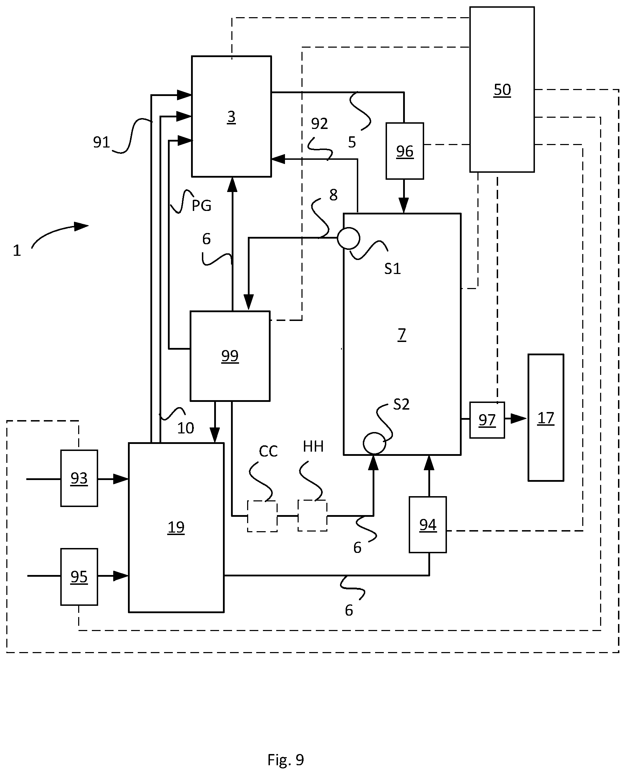

Fig. 9 illustrates a metal material production configuration 1, comprising a metal oxide material production unit 3, according to a seventh example. The produced metal oxide material 5, holding thermal energy originating from the production of the metal oxide material, is charged into a direct reduction facility 7.

Alternatively, the metal oxide material 5 holding said thermal energy is preferably transferred directly into the direct reduction facility 7.

An electrolysis unit 19 is configured to decompose water into a hydrogen gas 6 (reducing agent) and an oxygen gas 10.

A waste reducing fluid 8, generated by a chemical reaction between the metal oxide material 5 and the hydrogen gas 6, is discharged from the direct reduction facility 7 to a heat exchanger 99.

Hydrogen gas 6 is separated from the waste reducing fluid 8 and may be fed back to the metal oxide material production unit 3 and back to the direct reduction facility 7. The waste reducing fluid 8 further comprises water steam. The water steam is condensed into water (not shown), which is led back to the electrolysis unit 19 for re-use.

The waste reducing fluid 8 holds thermal energy, which is transferred to a process gas PG fed to the metal oxide material production unit 3.

The oxygen gas 10 produced by the electrolysis unit 19 is fed to the metal oxide material production unit 3 for efficient production of the metal oxide material 5.

A first excess heat hose 91 is coupled between the electrolysis unit 19 and the metal oxide material production unit 3 for transferring excess heat from the electrolysis unit 19 to the metal oxide material production unit 3.

A second excess heat hose 92 is coupled between the direct reduction facility 7 and the metal oxide material production unit 3 for transferring excess heat from the direct reduction facility 7 to the metal oxide material production unit 3.

The metal material production configuration 1 further comprises a control circuitry 50 adapted to control the production of the reduced metal material to be transported to the metal making industry 17. The control circuitry 50 comprises a data medium (not shown) storing a data program, which is programmed for causing the metal material production configuration 1 to execute an automatic or semi-automatic manufacture of the reduced metal material.

The data program comprises a program code, applied by a computer for causing the control circuitry 50 to manage and operate the production of the metal oxide material by means of the metal oxide material production unit 3. The control circuitry is configured to operate the transfer of the metal oxide material 5, holding thermal energy, to the direct reduction facility 7.

The control circuitry 50 may be configured to control the introduction of the reducing agent into the direct reduction facility via a reducing agent control unit 94.

The control circuitry 50 may be coupled to and configured to control the introduction of electrical power into the electrolysis unit 19 via a power control unit 93.

The control circuitry 50 may be coupled to and configured to control the introduction of electrical power into the electrolysis unit 19 via a power control unit 93.

The control circuitry 50 may be coupled to and configured to control the introduction of water into the electrolysis unit 19 via a water input control unit 95.

The control circuitry 50 may be coupled to and configured to control the introduction of water into the electrolysis unit 19 via a water input control unit 95.

The control circuitry 50 may be coupled to and configured to control the charging of metal oxide material 5 into the direct reduction facility 7 via a charging control unit 96.

The control circuitry 50 may be coupled to and configured to control the at least one process of the manufacturing thermal process of the metal oxide material production unit 3.

The control circuitry 50 may be coupled to and configured to control the heat exchanger 99.

The control circuitry 50 may be coupled to and configured to control the discharge of reduced metal material from the direct reduction facility 7 via a discharging control unit 97.

The control circuitry 50 may further be configured to control the reduction of the metal oxide material to reduced metal material by utilizing said thermal energy of the metal oxide material to heat or further heat the introduced reducing agent for achieving the chemical reaction.

Alternatively, a first sensor device S1 - configured to measure the hydrogen content of the waste reducing fluid - is arranged at a waste reduction fluid outlet device of the direct reduction facility 7.

Alternatively, the first sensor device is coupled (not shown) to the control circuitry 50.

Alternatively, the control circuitry 50 is configured to control the chemical reaction ongoing in the direct reduction facility 7 from measuring the hydrogen content of the waste reducing fluid.

Alternatively, a second sensor device S2 - configured to measure the hydrogen content of the reducing agent - is arranged at a reducing agent fluid inlet device 11 of the direct reduction facility 7.

Alternatively, the second sensor device S2 is coupled (not shown) to the control circuitry 50.

Alternatively, the control circuitry 50 is configured to control the electrolysis unit 19 from measuring the hydrogen content of the reducing agent introduced into the direct reduction facility 7.

Alternatively, a third sensor device S3 - configured to measure the oxygen content of a metal ore mixture prepared for production of the metal oxide material 5 - is arranged in the metal oxide material production unit 3.

Alternatively, the third sensor device S3 is coupled (not shown) to the control circuitry 50.

Alternatively, the control circuitry 50 is configured to control the amount of an oxygen deficient process gas fed to the metal oxide material production unit 3.

In such way is achieved that a metal ore mixture is prevented from being oxidized in a pre-heat zone of the metal oxide material production unit 3.

In such way is achieved that the oxygen content of the metal ore mixture can be controlled for regulating a thermal energy rise in the sintering and/or oxidation process performed by the manufacturing thermal process.

Alternatively, the interior of the direct reduction facility, in which interior the substantially or completely endothermal chemical reaction is made, is subjected to overpressure (at a pressure higher than atmospheric pressure).

Alternatively, the overpressure is achieved by the introduction of the reducing agent into the direct reduction facility, whereas the reducing agent being pressurized.

Alternatively, the reducing agent is pressurized be means of a compressor device CC.

Alternatively, the reducing agent comprises hydrogen gas, which hydrogen gas is produced by the electrolysis unit configured to produce pressurized hydrogen gas.

Alternatively, the reducing agent is heated before introduced into the interior of the direct reduction facility 7 be means of a reducing agent heating device HH.

Alternatively, the control circuitry 50 may be configured to control the operation of the metal material production configuration 1 in such way that the discharged reduced metal material exhibits a pre-determined temperature and/or hardness and/or strength and/or conglomerate dimension etc., when leaving the direct reduction facility 7 by regulating the amount of reducing agent introduced into the direct reduction facility 7 and/or by regulating the pressure of the pressurized reducing agent and/or by regulating the temperature of the reducing agent introduced into to the direct reduction facility 7 and/or by regulating the rate of charging of the metal oxide material into the direct reduction facility 7 and/or by controlling the manufacturing thermal process for providing a pre-determined temperature of the metal oxide material to be charged into the direct reduction facility 7 and/or controlling feeding of the waste reducing fluid 8 to the metal oxide material production unit 3 and/or controlling feeding of the oxygen-enriched process gas to the metal oxide material production unit 3 and/or controlling feeding of the oxygen deficient process gas to the metal oxide material production unit.

Alternatively, the quality of the finished reduced metal material is controlled and/or monitored by the control unit, wherein the control unit controls the residence time of the metal ore mixture in the indurating apparatus and/or controls the produced particle size of the agglomerates and/or controls the establishment of an optimal temperature profile throughout the manufacturing thermal process of the metal oxide material production unit 3.

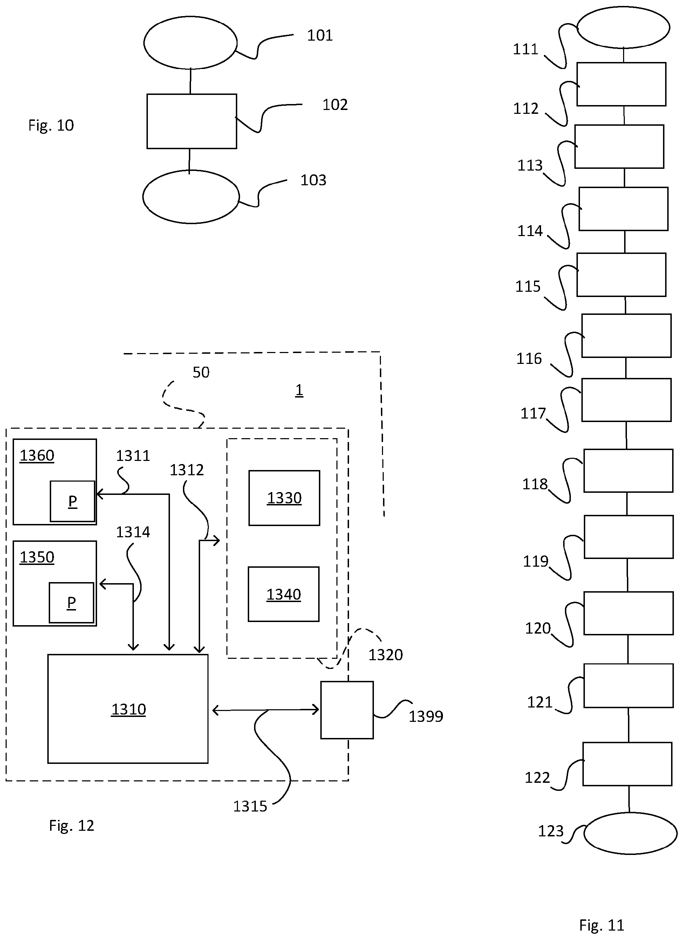

Fig. 10 illustrates a flowchart showing an exemplary method of reduction of metal oxide material. The metal oxide material is produced by a metal oxide material production unit. The metal oxide material is transferred from the metal oxide material production unit into a direct reduction facility for charging the metal oxide material holding thermal energy that originates from a manufacturing thermal process of the metal oxide material production unit, the direct reduction facility is configured for introduction of a reducing agent adapted to react with the metal oxide material holding thermal energy. The method comprises a first step 101 starting the method. A second step 102 shows the performance of the method. A third step 103 comprises stopping the method. The second step 102 may comprise; producing said metal oxide material by said the metal oxide material production unit; charging said metal oxide material, holding thermal energy, to the direct reduction facility; introducing the reducing agent to the direct reduction facility; reducing said metal oxide material to reduced metal material by utilizing said thermal energy of the metal oxide material to heat the introduced reducing agent for achieving a chemical reaction; and discharging the reduced metal material from the direct reduction facility.

Fig. 11 illustrates a flowchart showing an exemplary method of reduction of metal oxide material. The method comprises a first step 111 starting the method. A second step 112 comprises producing said metal oxide material by said the metal oxide material production unit. An third step 113 comprises grinding metal ore bodies; separating metal ore particles; producing a metal ore mixture of said metal ore particles; and indurating the metal ore mixture. A fourth step 114 comprises indurating the metal ore mixture. A fifth step 115 comprises a step of pre-heating and/or heating the iron ore mixture and/or a step of oxidation of magnetite ore to hematite ore. A sixth step 116 comprises charging said metal oxide material holding thermal energy to the direct reduction facility. A seventh step 117 comprises transferring the metal oxide material holding said thermal energy from the metal oxide material production unit to the direct reduction facility. An eight step 118 comprises introducing the reducing agent to the direct reduction facility. A ninth step 119 comprises reducing said metal oxide material to reduced metal material by utilizing said thermal energy of the metal oxide material to heat or further heat the introduced reducing agent for achieving a chemical reaction.

A tenth step 120 comprises discharging the reduced metal material from the direct reduction facility. An eleventh step 121 comprises decomposing water into hydrogen gas and into an oxygen gas. A twelfth step 122 comprises transferring the oxygen gas to the metal oxide material production unit and transferring the hydrogen gas constituting the reducing agent to the direct reduction facility. A thirteenth step 123 comprises stopping the method.

Fig. 12 illustrates a control circuitry 50 of a metal material production configuration 1 according to a further example. The control circuitry 50 is configured to control the method of reduction of a metal oxide material, produced by a metal oxide material production unit, the metal oxide material being transferred from the metal oxide material production unit into a direct reduction facility for charging the metal oxide material holding thermal energy that originates from a manufacturing thermal process of the metal oxide material production unit, the direct reduction facility is configured for introduction of a reducing agent adapted to react with the metal oxide material holding thermal energy. The method is characterized by the steps of: producing said metal oxide material by said the metal oxide material production unit; charging said metal oxide material, holding thermal energy, to the direct reduction facility; introducing the reducing agent to the direct reduction facility; reducing said metal oxide material to reduced metal material by utilizing said thermal energy of the metal oxide material to heat the introduced reducing agent for achieving a substantially or completely endothermal chemical reaction; and discharging the reduced metal material from the direct reduction facility.

The control circuitry 50 may comprise a computer and a non-volatile memory NVM 1320, which is a computer memory that can retain stored information even when the computer is not powered.

The control circuitry 50 further comprises a processing unit 1310 and a read/write memory 1350. The NVM 1320 comprises a first memory unit 1330. A computer program (which can be of any type suitable for any operational data) is stored in the first memory unit 1330 for controlling the functionality of the control circuitry 5. Furthermore, the control circuitry 50 comprises a bus controller (not shown), a serial communication unit (not shown) providing a physical interface, through which information transfers separately in two directions.

The control circuitry 50 may comprise any suitable type of I/O module (not shown) providing input/output signal transfer, an A/D converter (not shown) for converting continuously varying signals from a sensor arrangement (not shown) of the control circuitry 50 configured to determine the actual operational status of the metal material production configuration 1.

The control circuitry 50 is configured to provide proper adjustments of e.g. the flow of process gas, hydrogen gas, oxygen gas, charging rate of metal oxide material into the direct reduction facility, discharging rate of reduced metal material, etc. from received control signals, and from detected operational status and other operational data.

The control circuitry 50 also comprises an input/output unit (not shown) for adaptation to time and date. The control circuitry 50 comprises an event counter (not shown) for counting the number of event multiples that occur from independent events in operation of the metal material production configuration 1.

Furthermore, the control circuitry 50 includes interrupt units (not shown) associated with the computer for providing a multi-tasking performance and real time computing for semiautomatically and/or automatically operation of the metal material production configuration 1. The NVM 1320 also includes a second memory unit 1340 for external sensor check of the sensor arrangement.

A data medium for storing a program P may comprise program routines for automatically adapting the operation of the metal material production configuration 1 in accordance with operational data.

The data medium for storing the program P comprises a program code stored on a medium, which is readable on the computer, for causing the control circuitry 50 to perform the method and/or method steps described herein.

The program P further may be stored in a separate memory 1360 and/or in the read/write memory 1350. The program P, in this embodiment, is stored in executable or compressed data format.

It is to be understood that when the processing unit 1310 is described to execute a specific function that involves that the processing unit 1310 may execute a certain part of the program stored in the separate memory 1360 or a certain part of the program stored in the read/write memory 1350.

The processing unit 1310 is associated with a data port 999 for communication via a first data bus 1315 to be coupled to a set of process control units of the direct reduction facility and the electrolysis unit for performing the method steps.

The non-volatile memory NVM 1320 is adapted for communication with the processing unit 1310 via a second data bus 1312. The separate memory 1360 is adapted for communication with the processing unit 610 via a third data bus 1311. The read/write memory 1350 is adapted to communicate with the processing unit 1310 via a fourth data bus 1314. After that the received data is temporary stored, the processing unit 1310 will be ready to execute the program code, according to the above-mentioned method.

Preferably, the signals (received by the data port 999) comprise information about operational status of the metal material production configuration 1. The received signals at the data port 999 can be used by the control circuitry 50 for controlling and monitoring automatic calibration of a sensor device detecting operational status of the metal material production configuration.

Information and data may be manually fed, by an operator, to the control circuitry 50 via a suitable communication device, such as a computer display or a touchscreen.

The method can also partially be executed by the control circuitry 50 by means of the processing unit 1310, which processing unit 1310 runs the program P being stored in the separate memory 1360 or the read/write memory 1350. When the control circuitry 50 runs the program P, the suitable method steps disclosed herein will be executed.

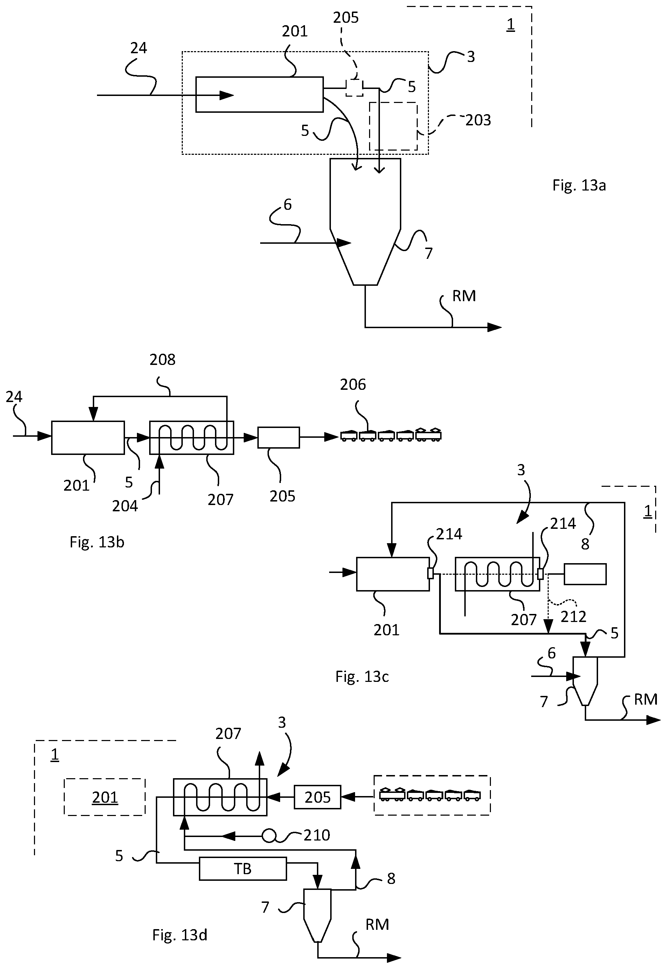

Fig. 13a shows a metal oxide material production unit 3 of a metal material production configuration 1 comprising a metal oxide material pre-heating apparatus 203 and a first transferring device (not shown) adapted to transfer of metal oxide material holding thermal energy that originates from a manufacturing thermal process provided by the metal oxide material pre-heating apparatus 203.

The direct reduction facility 7 may be provided with or coupled to the first transferring device comprising a first heat-resistant conveyor band (not shown) or other suitable transfer member, electrically coupled to a control circuitry (not shown) adapted to control the charging rate for charging the metal oxide material holding thermal energy into the reduction facility 7.

The metal oxide material pre-heating apparatus 203 of the metal oxide material production unit 3 may produce the metal oxide material holding thermal energy by means of e.g. a burner device, a heating element etc. (not shown), wherein previously cooled down metal oxide material is pre-heated by the metal oxide material pre-heating apparatus 203.

The previously cooled down metal oxide material may be stored at a storage stockpile 205 before transferring the metal oxide material to the metal oxide material pre-heating apparatus 203.

A metal oxide material pelletizing plant 201 of the metal oxide material production unit 3 may produce the metal oxide material holding thermal energy by means of an indurating apparatus (not shown) of the metal oxide material pelletizing plant 201. The metal oxide material pelletizing plant 201 is configured to process metal ore mixture 24 into said metal oxide material 5 holding thermal energy.

Optionally, the metal oxide material 5 holding thermal energy is transferred from the metal oxide material pelletizing plant 201 via a second transferring device (not shown) to the direct reduction facility 7 configured for reduction of the metal oxide material into reduced metal material RM by means of a reducing agent 6 introduced into the direct reduction facility 7. The metal oxide material 5 holding thermal energy produced by the metal oxide material pelletizing plant 201 may be charged directly into the direct reduction facility 7 via the second transferring device comprising a second heat-resistant conveyor band (not shown) or other suitable transfer member.

Optionally, the metal oxide material 5 holding thermal energy is transferred from the metal oxide material pre-heating apparatus 203 to the direct reduction facility 7 configured for reduction of the metal oxide material 5 into reduced metal material RM by means of the reducing agent 6 introduced into the direct reduction facility 7.

The metal oxide material 5 holding thermal energy provided by the metal oxide material pelletizing plant 201 or by the metal oxide material pre-heating apparatus 203 is reduced by the reducing agent 6 in the direct reduction facility 7 utilizing the thermal energy of the metal oxide material to heat or further heat the introduced reducing agent 6 for achieving a chemical reaction providing the reduced metal material RM.

Fig. 13b shows a metal oxide material cooler/pre-heating apparatus 207 configured to operate as a metal oxide material pre-heating apparatus or as a metal oxide material cooler apparatus.

A metal oxide material pelletizing plant 201 of a metal oxide material production unit (not shown) is coupled to the metal oxide material cooler/pre-heating apparatus 207 and produces a metal oxide material 5 holding thermal energy by means of an indurating apparatus (not shown) of the metal oxide material pelletizing plant 201. The metal oxide material pelletizing plant 201 is configured to process a metal ore mixture 24 into said metal oxide material 5 holding thermal energy.

The manufacturing thermal process may be adapted for producing the metal oxide material and comprises a step of indurating a metal ore mixture for producing the metal oxide material holding a thermal energy. The step of indurating the metal ore mixture may comprises a step of oxidation of the metal ore mixture and/or a step of sintering the metal ore mixture.

The metal oxide material 5 holding thermal energy is transferred from the metal oxide material pelletizing plant 201 to the metal oxide material cooler/pre-heating apparatus 207, which is configured to cool down the metal oxide material 5 into a cooled down metal oxide material transferred to a storage stockpile 205. The thermal energy of the metal oxide material 5 is recovered by the metal oxide material cooler/pre-heating apparatus 207 by means of a process gas 204 fed through the metal oxide material cooler/pre-heating apparatus 207.

The metal oxide material cooler/pre-heating apparatus 207 is set in a cooling operational mode for heating the process gas 204 and providing a heat containing process gas 208 transferred back to the metal oxide material pelletizing plant 201. The heat containing process gas 208 is used by the metal oxide material production unit for producing the metal oxide material 5 holding thermal energy. A transport vehicle 206 is configured to transport the cooled down metal oxide material to a direct reduction facility (not shown) located remote from the metal oxide material pelletizing plant 201 and the metal oxide material cooler/pre-heating apparatus 207. The remote located direct reduction facility may be coupled to a pre-heating apparatus (not shown) for providing metal oxide material holding thermal energy to be charged into the remote located direct reduction facility.

Fig. 13c shows a metal oxide material cooler/pre-heating apparatus 207 associated with a metal oxide material pelletizing plant 201 of a metal oxide material production unit 3 of a metal material production configuration 1. Optionally, the metal oxide material cooler/pre-heating apparatus 207 is disconnected from the metal oxide material pelletizing plant 201, wherein the metal oxide material is (preferably directly) transferred from the metal oxide material pelletizing plant 201 into a direct reduction facility 7 (i.e. charging the metal oxide material 5 holding thermal energy that originates from the manufacturing thermal process of the metal oxide material pelletizing plant 201).

The metal oxide material 5 holding thermal energy provided by the metal oxide material pelletizing plant 201 is reduced by a reducing agent 6 introduced into the direct reduction facility 7 utilizing the thermal energy of the metal oxide material 5 for achieving a chemical reaction providing the reduced metal material RM. A waste reduction fluid outlet (not shown) at a top section of the direct reduction facility 7 is configured to draw waste reducing fluid 8 holding heat through a heat exchanger (not shown), that provides a heat containing process gas transferred back to the metal oxide material pelletizing plant 201.

The metal oxide material pelletizing plant 201 if the metal oxide material production unit 3 comprises a metal oxide material discharge outlet 214 configured to discharge the metal oxide material 5 holding thermal energy from the metal oxide material production unit 3 for charging the metal oxide material 5 holding thermal energy into the reduction facility 7.

Optionally, the metal oxide material 5 holding thermal energy is transferred via the metal oxide material cooler/pre-heating apparatus 207, set in an operational inactive mode, to the reduction facility 7 via a transfer path 212.

The metal oxide material may be transferred from the metal oxide material cooler/pre-heating apparatus 207 via a metal oxide material discharge outlet 214 of the metal oxide material cooler/pre-heating apparatus 207, set in the operational inactive mode, into the direct reduction facility 7. The operational inactive mode involves that the metal oxide material cooler/pre-heating apparatus 207 does not cool down the metal oxide material 5.

Fig. 13d shows a metal oxide material cooler/pre-heating apparatus 207 of a metal material production configuration 1.

The metal oxide material cooler/pre-heating apparatus 207 is set in a pre-heating operational mode for pre-heating a previously cooled down metal oxide material transferred from a storage stockpile 205 to the metal oxide material cooler/pre-heating apparatus 207. The storage stockpile 205 is configured to store previously cooled down metal oxide material. The pre-heated metal oxide material, i.e. the metal oxide material 5 holding thermal energy is transferred via a charging device TB configured for charging the metal oxide material 5 holding said thermal energy from the metal oxide material cooler/pre-heating apparatus 207 into the direct reduction facility 7.

The thermal energy originates from a manufacturing thermal process provided by the metal oxide material cooler/pre-heating apparatus 207 adapted to produce - in pre-heating operational mode - the metal oxide material 5 holding thermal energy.

In the pre-heating operational mode, the previously cooled down metal oxide material may be firstly heated by a heating source (such as an electric heating element 210 or process gas burner device or other). Additionally, it is possible to make use of a waste reducing fluid 8 holding heat energy recovered from the direct reduction facility 7 and/or heat energy from a metal oxide material pelletizing plant 201 under operation or from other heat resources, for adding heat to the pre-heating process for pre-heating the previously cooled down metal oxide material.

The manufacturing thermal process is thus adapted for providing the metal oxide material holding thermal energy and comprises a step of pre-heating the previously cooled down metal oxide material for providing the metal oxide material holding said thermal energy.

Alternatively, subsequently the step of pre-heating the previously cooled down metal oxide material for producing the metal oxide material holding thermal energy, the following steps are necessary for producing a reduced metal material RM ; producing said metal oxide material 5; charging said metal oxide material 5, holding thermal energy, into the direct reduction facility 7; introducing a reducing agent into the direct reduction facility 7; reducing said metal oxide material 5 to the reduced metal material RM by utilizing said thermal energy of the metal oxide material 5 to heat or further heat the introduced reducing agent for achieving a chemical reaction; and discharging the reduced metal material RM from the direct reduction facility 7.

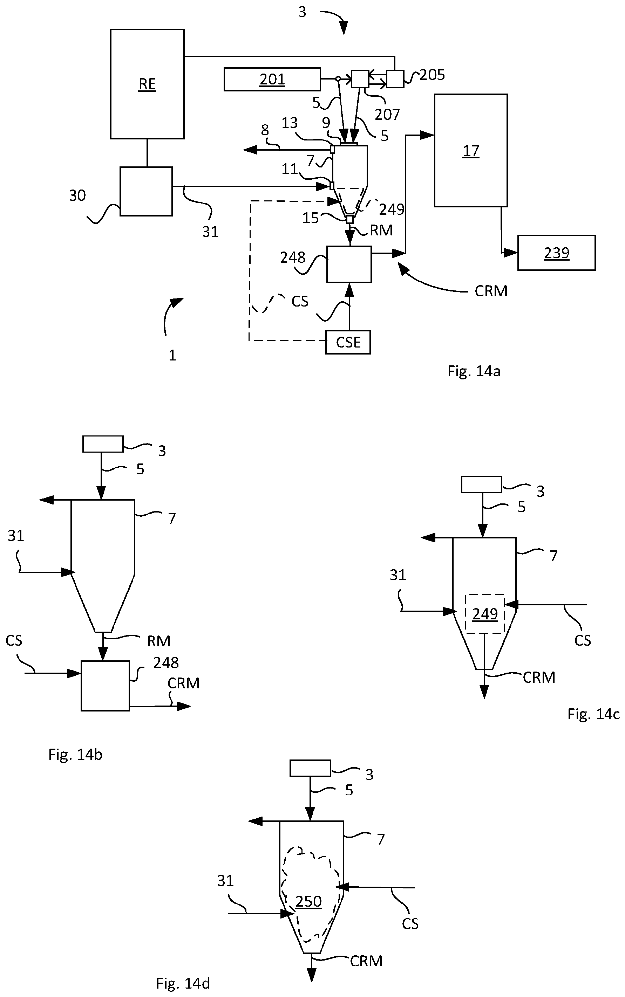

Figs. 14a to 14d illustrate examples of a direct reduction facility 7 configured for carburizing an iron ore oxide material 5 subject to reduction and/or carburizing a reduced metal material RM.

Fig. 14a illustrates a metal material production configuration 1 and a process according to one aspect using renewable energy RE for direct reduction of metal oxide material into carbon-free reduced metal material or carbon containing reduced metal material, which is processed by a metal making industry 17 (e.g. a steel making industry producing steel 239). A reducing agent 31 (e.g. hydrogen gas) is produced by a reducing agent supply 30 (e.g. a hydrogen supply, such as an electrolysis unit) is fed to a direct reduction facility 7.

The metal material production configuration 1 comprises a metal oxide material production unit 3, which is adapted to produce metal oxide material 5 holding thermal energy originating from an induration process provided by an induration apparatus (not shown) of a metal oxide material pelletizing plant 201 of the metal oxide material production unit 3.

The metal oxide material 5 holding thermal energy may be cooled down by a metal oxide material cooler/pre-heating apparatus 207 and transferred to a cooled down metal oxide material storage stockpile 205.

The metal oxide material cooler/pre-heating apparatus 207 of the metal oxide material production unit 3 is configured to pre-heat previously cooled down metal oxide material transferred from the storage stockpile 205 to the metal oxide material cooler/pre-heating apparatus 207.

The metal oxide material 5, holds thermal energy that originates either from the induration process or from pre-heating of the metal oxide material by means of the metal oxide material cooler/pre-heating apparatus 207, is charged into a direct reduction facility 7.

The direct reduction facility 7 comprises a metal oxide material charging inlet device 9, which is configured for transferring the metal oxide material 5 from the metal oxide material production unit 3 into the direct reduction facility 7. The direct reduction facility 7 comprises a reducing agent fluid inlet device 11 configured for introducing the reducing agent 31, which is adapted to react with the metal oxide material 5 holding thermal energy, into the direct reduction facility 7. The direct reduction facility 7 comprises a waste reduction fluid outlet device 13 configured for discharging a waste reduction fluid 8 from the direct reduction facility 7, which waste reduction fluid 8 is recovered and re-used by the direct reduction facility 7 and/or the metal oxide material production unit 3.

The thermal energy and gas properties of the waste reduction fluid 8 may be re-used by the metal oxide material production unit 3. The waste reduction fluid 8 may be transferred from the direct reduction facility 7 to the metal oxide material cooler/pre-heating apparatus 207 for pre-heating the metal oxide material 5 and/or used by the induration apparatus of the metal oxide material pelletizing plant 201.

The direct reduction facility 7 is configured to provide reduction of the metal oxide material 5 to a reduced metal material RM by utilizing thermal energy of the metal oxide material 5, which thermal energy originates from the metal oxide material production unit 3 providing the manufacturing thermal process, to heat or further heat the reducing agent 31 for achieving a chemical reaction between the metal oxide material and the reducing agent 31 providing said reduction. The manufacturing (and/or generating) thermal process is thus adapted for generating (producing) the pre-heated metal oxide material.

The direct reduction facility 7 comprises a reduced metal material outlet device 15 configured for discharging the reduced metal material RM from the direct reduction facility 7 to a separate carburizing reactor 248 configured for carburizing the reduced metal material RM.

A carbon containing substance CS is extracted from a carbon source CSE and is added to the reduced metal material RM in the separate carburizing reactor 248 configured for adding the carbon containing substance CS to the reduced metal material RM for producing a carbon containing reduced metal material CRM. The carbon containing reduced metal material CRM obtained by the separate carburizing reactor 248 is discharged from the separate carburizing reactor 248 and being transferred to the metal making industry 17.

Alternatively, the carbon containing substance CS comprises a pure carbon element or being an element of molecules, such as methane, propane or other hydrocarbon or other molecules.

Alternatively, the carbon containing substance CS is added to the reduced metal material in a separate (insulated) carburizing zone 249 of the direct reduction facility 7 for producing a carbon containing reduced metal material.

Fig. 14b illustrates a direct reduction facility 7 comprising a separate carburizing reactor 248 coupled to a reduced metal material discharge outlet of the direct reduction facility 7. A metal oxide material 5 holding thermal energy is charged into the direct reduction facility 7 from a metal oxide material production unit 3 providing the thermal energy. A reducing agent 31 fed into the interior of the direct reduction facility 7. A carbon containing substance CS is extracted from a carbon source (not shown) and is introduced into the separate carburizing reactor 248 configured for carburizing the reduced metal material RM. A carbon containing reduced metal material CRM obtained by the separate carburizing reactor 248 is discharged from the separate carburizing reactor 248.

Fig. 14c shows a separate (insulated) carburizing zone 249 of the interior of a direct reduction facility 7. A metal oxide material 5 holding thermal energy is charged into the direct reduction facility 7 from a metal oxide material production unit 3 providing the thermal energy. The separate (insulated) carburizing zone 249 is configured for avoiding mixing a carbon containing substance CS, introduced into the separate (insulated) carburizing zone 249, with a reducing agent 31 fed into the interior of the direct reduction facility 7. The reducing agent 31 is introduced into the direct reduction facility 7 for generating a reduced metal material, which is carburized in the separate (insulated) carburizing zone 249 for providing a carbon containing reduced metal material CRM.

Fig. 14d shows a carburizing volume 250 of the interior of the direct reduction facility 7, which carburizing volume 250 is configured for reduction of the metal oxide material 5 charged into the direct reduction facility 7, which the metal oxide material 5 holds thermal energy originating from a metal oxide material pelletizing plant (not shown) and/or a metal oxide material pre-heating apparatus (not shown) of a metal oxide material production unit 3. The carburizing volume 250 is configured for carburizing the metal oxide material 5 subject to reduction by that a carbon containing substance CS fed into direct reduction facility 7 is mixed with a reducing agent 31 fed into direct reduction facility 7.

The carburizing volume 250 is configured to provide a carburizing chemical reaction between the reducing agent 31 (e.g. hydrogen H2) and the carbon containing substance CS (e.g. Carbon dioxide CO2) for achieving carburizing of the metal oxide material 5 subject to reduction, wherein the metal (iron ore) oxide material 5 under reduction acts as catalyst to produce a carbon containing material added to the metal (iron ore) oxide material 5 subject to reduction.

Alternatively, the carburizing volume 250 is configured to provide a carburizing chemical reaction between hydrogen H2 (of the reducing agent and/or separately introduced H2 into the direct reduction facility 7) and Carbon dioxide CO2 for achieving carburizing of the metal (iron ore) oxide material 5 subject to reduction acting as catalyst to produce a carbon containing material added to the metal (iron ore) oxide material 5 under reduction according to the following formulas:

CO₂ + 2H₂ → C + 2 H₂O

CO₂ + H₂ → CO + H₂O

CO + H₂ → C + H₂O

for providing a carbon containing reduced metal material CRM.

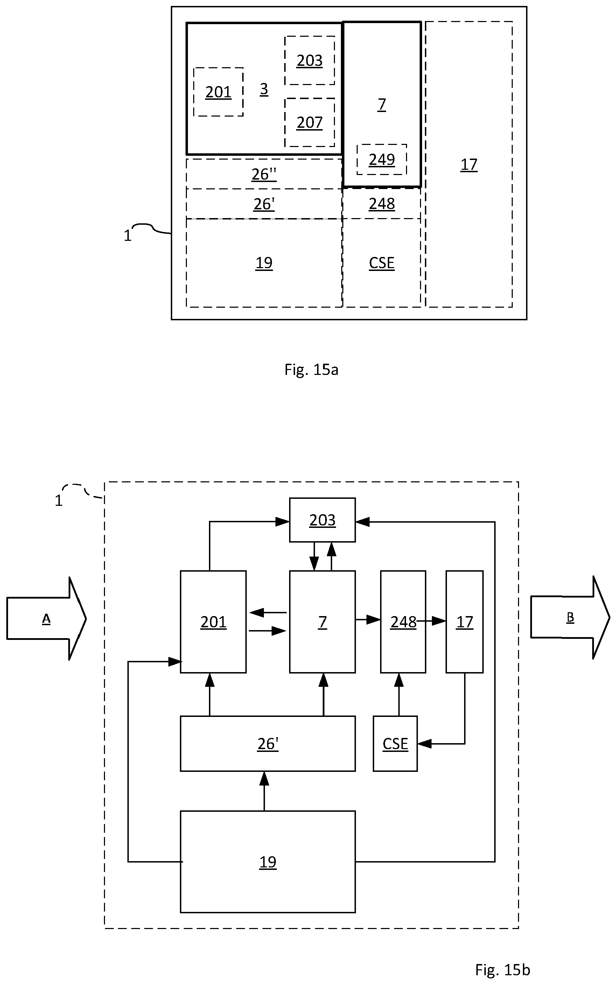

Fig. 15a shows an example of an integrated metal material production configuration 1. A direct reduction facility 7 is integrated with a metal oxide material production unit 3 and/or a metal oxide material pelletizing plant 201 of the metal oxide material production unit 3 and/or a metal oxide material pre-heating apparatus 203 of the metal oxide material production unit 3 and/or a metal oxide material cooler/pre-heating apparatus 207 of the metal oxide material production unit 3 and/or a carburizing reactor 248 for carburizing the reduced metal material and/or a carburizing zone 249 for carburizing the reduced metal material and/or a carbon source CSE and/or a metal making industry 17.

The integrated metal material production configuration 1 may comprise an electrolysis unit 19 and/or a hydrogen storage and buffer tank 26' and/or an oxygen storage tank 26", which are situated in the vicinity of the direct reduction facility 7 and/or the metal oxide material production unit 3. Preferably, they are coupled to the direct reduction facility 7 via pipe lines (not shown).

Alternatively, the reducing agent (hydrogen) is, before it is introduced into the direct reduction facility 7, stored in the hydrogen storage and buffer tank 26'. Alternatively, oxygen is stored in the oxygen storage tank 26" before being fed to the metal oxide material production unit 3.

Fig. 15b shows further an example of an integrated metal material production configuration 1. Metal ore A is transferred to a metal oxide material pelletizing plant 201 for producing metal oxide material holding thermal energy, which may be directly charged into a direct reduction facility 7. The metal oxide material may be transferred to a storage stockpile (not shown) for storage of cooled down metal oxide material. The cooled down metal oxide material is pre-heated by a pre-heating apparatus 203 for producing metal oxide material holding thermal energy to be charged into the direct reduction facility 7.

An electrolysis unit 19 is configured for producing hydrogen gas and oxygen gas to be used by the pre-heating apparatus 203, by the direct reduction facility 7 and by the metal oxide material pelletizing plant 201. The hydrogen gas may be stored in a hydrogen storage and buffer tank 26', which is an efficient way to store energy.

Reduced metal material is discharged from the direct reduction facility 7 to a carburizing reactor 248 for carburizing the reduced metal material into an intermediate product prepared to be transported to a metal making industry 17, which produces metal material B.

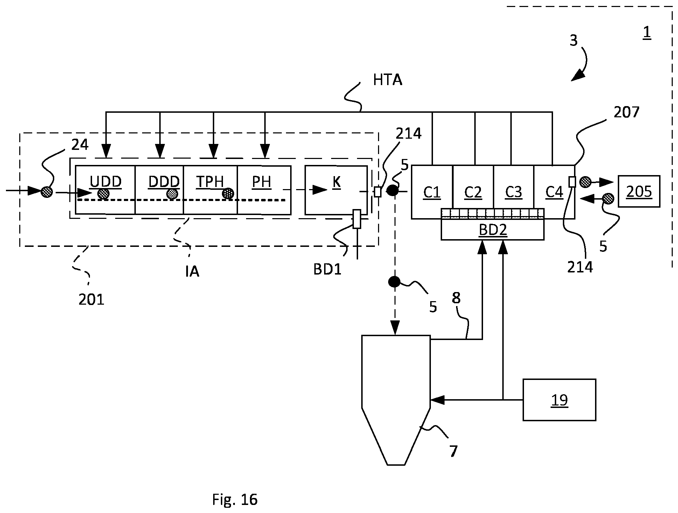

Fig. 16 illustrates an example of a metal oxide material production unit 3 of a metal material production configuration 1. The metal oxide material production unit 3 comprises a metal oxide material pelletizing plant 201 making use of an induration apparatus IA. The induration apparatus IA of the metal oxide material pelletizing plant 201 is configured to provide a manufacturing thermal process comprising a process of indurating a metal ore mixture 24 into a metal oxide material 5 holding thermal energy.

The induration apparatus IA comprises a drying zone forming an updraft drying zone UDD and a downdraft drying zone DDD. The induration apparatus IA further comprises a heating zone configured to pre-heat the metal ore mixture 24, which heating zone comprises a tempered pre-heating zone TPH and a pre-heating zone PH.

The induration apparatus IA further comprises a kiln unit K configured for oxidizing and sintering the metal ore mixture 24 into the metal oxide material 5. The kiln unit K comprises a burner device BD1 arranged in the indurating apparatus 22 for sintering and oxidizing the metal ore mixture 24.

Preferably, the burner device BD1 comprises a hydrogen burner adapted for combustion, wherein the hydrogen burner uses e.g. oxygen and pure hydrogen gas or substantially pure hydrogen gas recovered from a waste reduction fluid 8 drawn from a direct reduction facility 7 configured for reduction of the metal oxide material 5 holding thermal energy. Alternatively, the hydrogen gas may originate from any type of hydrogen source, but preferably from an electrolysis unit or recovered from said waste reduction fluid 8. The oxygen gas may originate from an electrolysis unit 19 or from any type of oxygen source.

The hydrogen burner provides that hydrogen gas rapidly reacts with oxygen gas leading to a high flame temperature suitable for said heating and oxidizing of the metal ore mixture 24.

No carbon dioxide is emitted from the hydrogen burner, as there is no carbon content in hydrogen gas. By means of the high flame temperature and thereby achieved short flame, the kiln unit K can be less bulky than known units.

The produced metal oxide material 5 is transferred from the metal oxide material pelletizing plant 201 to the direct reduction facility 7 or to a storage stockpile 205. The metal oxide material, holding thermal energy, is thus optionally transferred to a metal oxide material cooler/pre-heating apparatus 207 of the metal oxide material production unit 3, for cooling down the metal oxide material 5.

### Option 1:

In case of transferring the metal oxide material 5 to the direct reduction facility 7, the metal oxide material 5, holding thermal energy, is transferred into the direct reduction facility 7, wherein thermal energy of the metal oxide material 5 generated by the manufacturing thermal process is used for direct reduction of the metal oxide material 5.

### Option 2:

In case of transferring the metal oxide material 5 to the storage stockpile 205, the metal oxide material 5 is transferred through a metal oxide material cooler/pre-heating apparatus 207. The metal oxide material cooler/pre-heating apparatus 207 is configured to cool down the metal oxide material 5 discharged from the induration apparatus IA.

The metal oxide material cooler/pre-heating apparatus 207 comprises a heat transferring arrangement HTA configured for transferring heat energy content from the metal oxide material 5, recovered by the metal oxide material cooler/pre-heating apparatus 207, to the induration apparatus IA, which heat energy content is used for the production of the metal oxide material 5. The metal oxide material cooler/pre-heating apparatus 207 comprises a first cooler zone C1, a second cooler zone C2, a third cooler zone C3 and a fourth cooler zone C4, at least one of which is coupled to the induration apparatus IA via a pipe arrangement. Efficient re-use of heat energy is thus provided by transferring heat energy back to the induration apparatus IA from the metal oxide material cooler/pre-heating apparatus 207.

The metal oxide material cooler/pre-heating apparatus 207 may also be used as a pre-heating apparatus. For pre-heating the previously cooled down metal oxide material, a heating element is used combined with a burner apparatus BD2 that comprises a hydrogen burner adapted for combustion. The hydrogen burner uses e.g. oxygen (e.g. from the electrolysis unit 19) and pure hydrogen gas or substantially pure hydrogen gas from said electrolysis unit 19 and/or from the waste reduction fluid 8. Additionally, exhaust low-grade heat energy used for the downdraft drying, tempered pre-heating, and pre-heating process may be fed further to the metal oxide material cooler/pre-heating apparatus 207 for additional pre-heating of the previously cooled down metal oxide material.

### Option 3:

In case of pre-heating previously cooled down metal oxide material into the direct reduction facility 7, a pre-heating apparatus is used. For pre-heating the previously cooled down metal oxide material, a heating element is used combined with a burner apparatus.

The metal oxide material production unit 3 comprises a metal oxide material discharge outlet 214 configured to discharge the metal oxide material 5 holding thermal energy from the metal oxide material production unit 3.

The induration comprises an oxidation and/or sintering process of the metal ore mixture 24, which oxidation and/or sintering process being performed with oxygen-enriched process gas maintaining high oxygen pressure during the oxidation and/or sintering process of the manufacturing thermal process. A heated process gas (not shown) constitutes an oxygen deficient process gas fed to a drying and/or pre-heating unit of a metal oxide material production unit 3, for example the updraft drying zone UDD and/or the downdraft drying zone DDD and/or the tempered pre-heating zone TPH and/or the pre-heating zone PH.

Optionally, the metal oxide material 5 produced by the induration apparatus IA is fed via the metal oxide material cooler/pre-heating apparatus 207 that is set in an operational inactive mode for not cooling down the metal oxide material 5, but transport the metal oxide material 5 holding thermal energy to the metal oxide material discharge outlet 214, wherein the metal oxide material 5 holding thermal energy is ready to be charged into the direct reduction facility 7. Optionally, even further thermal energy may be added to the metal oxide material holding thermal energy by means of the metal oxide material cooler/pre-heating apparatus 207.

The present disclosure or disclosures may not be restricted to the examples described above, but many possibilities to modifications, or combinations of the described examples thereof should be apparent to a person with ordinary skill in the art without departing from the basic idea as defined in the appended claims.

## Claims

1. A method of reduction of a metal oxide material (5), produced by a metal oxide material production unit (3), the metal oxide material (5) being transferred from the metal oxide material production unit (3) into a direct reduction facility (7) for charging the metal oxide material (5) holding thermal energy that originates from a manufacturing thermal process of the metal oxide material production unit (3), the direct reduction facility (7) is configured for introduction of a reducing agent (6, 31) adapted to react with the metal oxide material (5) holding thermal energy, wherein the reducing agent comprises a hydrogen gas (6) generated by an electrolysis unit (19), the method comprises the step of decomposing water (w) into said hydrogen gas (6) and into an oxygen gas (10); the method comprises the steps of: transferring the oxygen gas (10) to the metal oxide material production unit (3) for producing the metal oxide material (5);
- producing said metal oxide material (5);
- charging said metal oxide material (5), holding thermal energy, to the direct reduction facility (7);
- introducing the reducing agent (6, 31) to the direct reduction facility (7);
- reducing said metal oxide material (5) to a reduced metal material (RM) by utilizing said thermal energy of the metal oxide material (5) to heat or further heat the introduced reducing agent (6, 31) for achieving a chemical reaction; and
- discharging the reduced metal material from the direct reduction facility (7).

2. The method according to claim 1, **wherein** the metal oxide material (5) holding thermal energy is transferred from the metal oxide material production unit (3) directly to the direct reduction facility (7) in order to preserve thermal heat of the metal oxide material (3).

3. The method according to claim 1 or 2, **wherein** the production of said metal oxide material (5) comprises the following steps; grinding metal ore bodies; separating metal ore particles; producing a metal ore mixture (24) of said metal ore particles; indurating the metal ore mixture (24).

4. The method according to claim 3, **wherein** the step of indurating the metal ore mixture (24) comprises oxidation of the metal ore mixture (24) and/or sintering of the metal ore mixture (24).

5. The method according to claim 4, **wherein** the metal ore mixture (24) comprises an iron ore mixture and the step of pre-heating and/or heating the iron ore mixture comprises oxidation of magnetite ore to hematite ore.

6. The method according to claim 3 or 4, **wherein** the direct reduction facility is provided with a heat-resistant supply apparatus, comprising a transfer device electrically coupled to the control circuitry adapted to control the charging rate for charging the metal oxide material holding thermal energy into the reduction facility.

7. The method according to any of the preceding claims , **wherein** the oxygen gas (10) is transferred to the metal oxide material production unit (3) to be used in a step of indurating the metal ore mixture (24).

8. The method according to any of the preceding claims , **wherein** the method comprises a step of transferring excess heat from the electrolysis unit (19) to the metal oxide material production unit (3).

9. The method according to any of the preceding claims, **wherein** the method comprises a step of transferring excess heat from the direct reduction facility (7) to the metal oxide material production unit (3).

10. The method according to any of the preceding claims, **wherein** a waste reduction fluid (8) is transferred from the direct reduction facility (7) to the metal oxide material production unit (3), which waste reduction fluid (8) of the reducing agent (6) being used for the manufacturing thermal process provided by the metal oxide material production unit (3).

11. The method according to claim 10, **wherein** the waste reduction fluid (8) being used for pre-heating and/or heating the metal ore mixture (24) and/or oxidation of the metal ore mixture (24) and/or a step of sintering the metal ore mixture (24).

12. The method according to claim 10 or 11, **wherein** the waste reduction fluid (8) comprises hydrogen gas.

13. The method according to any of the preceding claims, **wherein** the manufacturing thermal process comprises pre-heating the metal oxide material (5) for providing the metal oxide material (5) holding thermal energy by means of a metal oxide material pre-heating apparatus (203, 207).

14. A metal material production configuration (1) adapted for manufacture of reduced metal material (RM),
- a metal oxide material production unit (3) configured for production of a metal oxide material (5) holding thermal energy by a manufacturing thermal process;
- a direct reduction facility (7) comprising:
- a metal oxide material charging inlet device (9), which is configured for transferring the metal oxide material (5) from the metal oxide material production unit (3) into the direct reduction facility (7);
- a reducing agent fluid inlet device (11) configured for introducing a reducing agent, which is adapted to react with the metal oxide material (5), into the direct reduction facility (7);
- a waste reduction fluid outlet device (13) configured for discharging waste reduction fluid (8) from the direct reduction facility (7);
- a reduced metal material outlet device (15) configured for discharging the reduced metal material from the direct reduction facility (7); the configuration (1) comprises:
- the direct reduction facility (7) is configured to provide reduction of the metal oxide material (5) to reduced metal material by utilizing thermal energy of the metal oxide material (5), which thermal energy originates from the manufacturing thermal process, to heat or further heat the reducing agent (6, 31) for achieving a chemical reaction between the metal oxide material (5) and the reducing agent (6) providing said reduction;
the metal material production configuration (1) further comprises;
- an electrolysis unit (19) configured to decompose water (w) into a hydrogen gas (6) and into an oxygen gas (10);
- a hydrogen gas transfer device (44', 44") configured to transfer the hydrogen gas (6) from the electrolysis unit (19) to the reducing agent fluid inlet device (11); and
- the metal material production configuration (1) comprises an oxygen gas transfer device (66', 66") configured to transfer the oxygen gas (10) from the electrolysis unit (19) to the metal oxide material production unit (3).

15. The metal material production configuration (1) according to claim 14, **wherein** the direct reduction facility (7) is integrated with the metal oxide material production unit (3).

16. The metal material production configuration (1) according to claim 14 , **wherein** the hydrogen gas transfer device (44', 44") comprises a fluid transportation vehicle and/or a hose arrangement.

17. The metal material production configuration (1) according to any of the preceding claims, **wherein** the direct reduction facility (7) is integrated with the electrolysis unit (19).

18. The metal material production configuration (1) according to any of the preceding claims, **wherein** an indurating apparatus (22) is configured for oxidation of the metal ore mixture (24).

19. The metal material production configuration (1) according to any of claims 14 to 18, **wherein** the metal oxide material charging inlet device (9) is configured for transferring the metal oxide material (5) from the metal oxide material production unit (3) directly into the direct reduction facility (7).

20. The metal material production configuration (1) according to any of claim 14 to 19, **wherein** the metal material production configuration (1) comprises a heat exchanger apparatus (79, 89) coupled to the direct reduction facility (7) via the waste reduction fluid outlet device (13), the heat exchanger apparatus (79, 89) is configured to transfer heat from a waste reduction fluid (8) of the reducing agent (6, 31), which waste reduction fluid (8) is fed from the direct reduction facility (7) to the metal oxide material production unit (3) and/or to the electrolysis unit (19) according to claim 14, to heat an energy carrying fluid (AG) passing through the heat exchanger apparatus (79, 89).

21. The metal material production configuration (1) according to any of claim 14 to 20, **wherein** the metal material production configuration (1) comprises a reducing agent heating device (HH) configured for heating the reducing agent before being introduced into the direct reduction facility (7).

22. The metal material production configuration (1) according to any of claim 14 to 21, **wherein** the metal material production configuration (1) comprises a control circuitry (50) adapted to control any of the method steps according to claims 1 to 12.

23. The method according to claim 1, **wherein** the hydrogen gas (6), before being introduced into the direct reduction facility (7), is stored in a hydrogen storage and buffer tank (26') and/or the oxygen (10) produced by the electrolysis unit (19), before feeding the oxygen (10) to the metal oxide material production unit, is stored in an oxygen storage tank (26").

24. The metal material production configuration (1) according to claim 14 to 22, **wherein** the direct reduction facility (7) is configured to produce a carbon-free reduced metal material and/or a carbon containing reduced metal material (CRM).

25. The metal material production configuration (1) according to claim 23, **wherein** the carbon containing reduced metal material (CRM) is obtained by a separate carburizing reactor (248) coupled to the direct reduction facility (7) and/or a separate carburizing zone (249) of the direct reduction facility (7) and/or a carburizing volume (250) of the interior of the direct reduction facility (7).

26. A data medium storing a data program (P), programmed for causing the metal material production configuration (1) according to claim 22 to execute an automatic or semi-automatic manufacture of reduced metal material (RM), wherein said data program (P) comprises a program code, the data medium is readable on a computer of the control circuitry (50), for causing the control circuitry (50) to perform the method steps of:
- producing said metal oxide material (5);
- charging said metal oxide material (5), holding thermal energy, to the direct reduction facility (7);
- introducing the reducing agent (6, 31) to the direct reduction facility (7);
- reducing said metal oxide material (5) to a reduced metal material (RM) by utilizing said thermal energy of the metal oxide material (5) to heat or further heat the introduced reducing agent (6, 31) for achieving a chemical reaction; and
- discharging the reduced metal material from the direct reduction facility (7).

27. The metal material production configuration (1) according to claim 14, wherein the direct reduction facility (7) is configured to be coupled to a metal oxide material production unit (3), enabling charging of a metal oxide material (5), holding thermal energy that originates from a manufacturing thermal process adapted for producing the metal oxide material (5), into the direct reduction facility (7), and the direct reduction facility (7) is configured for receiving a reducing agent (6, 31) for providing a chemical reaction.

28. The metal material production configuration (1) according to claim 27, **wherein** the direct reduction facility (7) comprises; a metal oxide material charging inlet device (9), which is configured for transferring the metal oxide material (5) from the metal oxide material production unit (3) into the direct reduction facility (7); a reducing agent fluid inlet device (11) configured for introducing a reducing agent (6, 31), which is adapted to react with the metal oxide material (5) according to a chemical reaction, into the direct reduction facility (7); a waste reduction fluid outlet device (13) configured for discharging waste reduction fluid (8) from the direct reduction facility (7); and a reduced metal material outlet device (15) configured for discharging the reduced metal material (RM) from the direct reduction facility (7).

29. The metal material production configuration (1) according to any of claims 27 to 28, **wherein** the reducing agent fluid inlet device (11) is associated with and/or coupled to an electrolysis unit (19) configured to decompose water into said reducing agent (6, 31).

30. The metal material production configuration (1) according to any of claims 27 to 29, **wherein** the reducing agent comprises a hydrogen gas (6).

31. The metal material production configuration (1) according to claim 14, wherein the metal oxide material production unit (3) is configured to produce a metal oxide material (5) from a metal ore mixture (24), **wherein** the produced metal oxide material (5) holds thermal energy that originates from a manufacturing thermal process of the metal oxide material production unit (3), and the metal oxide material production unit (3) is configured to transfer the metal oxide material (5) holding thermal energy to a direct reduction facility (7) configured to reduce the metal oxide material (5), holding thermal energy, into reduced metal material (RM) by a chemical reaction between the metal oxide material and a reducing agent (6, 31) introduced into the direct reduction facility (7).

32. The metal material production configuration (1) according to claim 31, **wherein** the metal oxide material production unit (3) is configured for heating the metal ore mixture (24) by means of excess heat transferred from the direct reduction facility (7) to the metal oxide material production unit (3).

33. The metal material production configuration (1) according to claim 31 or 32, **wherein** the metal oxide material production unit (3) comprises an oxygen gas discharge device (A) configured to discharge oxygen gas (10) to an indurating apparatus (22), which oxygen gas (10) is fed from an electrolysis unit (19) to the metal oxide material production unit (3) for oxidizing the metal ore mixture (24) and/or for heating the metal ore mixture by a combustion process.

34. The metal material production configuration (1) according to any of claims 31 to 33, **wherein** the metal oxide material production unit (3) comprises a hydrogen gas discharge device (B) configured to heat a process gas (PG) being used by the metal oxide material production unit (3).

35. The metal material production configuration (1) according to any of claims 31 to 34, **wherein** the metal oxide material production unit (3) comprises a hydrogen gas discharge device configured to provide heating of the metal ore mixture (24).

36. The metal material production configuration (1) according to claim 31, **wherein** the metal oxide material production unit (3) comprises a metal oxide material pre-heating apparatus (203, 207) configured to, by means of a manufacturing thermal process, pre-heat the metal oxide material for producing a metal oxide material holding said thermal energy.

37. A metal material production configuration (1) according to claim 14, **wherein**
- the metal material production configuration (1) is provided with feeding arrangement for providing an oxygen-enriched process gas (OE) maintaining high oxygen pressure during an oxidation and/or sintering process of a manufacturing thermal process, adapted for producing a metal oxide material (5); wherein the manufacturing thermal process comprises a step of indurating a metal ore mixture for producing the metal oxide material (5);
- a metal oxide material production unit (3) of the metal material production configuration (1) comprises an oxygen-enriched process gas ejector device (OEE) configured for introducing the oxygen-enriched process gas (OE) into an indurating apparatus (22) of the metal oxide material production unit (3); and
- the metal material production configuration (1) comprises an oxygen gas transfer device (66', 66") configured to transfer an oxygen gas (10) from an electrolysis unit (19) to the metal oxide material production unit (3).

## Patentansprüche

1. Verfahren zur Reduktion von Metalloxidmaterial (5), das durch eine Einheit (3) zur Produktion von Metalloxidmaterial produziert wird, wobei das Metalloxidmaterial (5) von der Einheit (3) zur Produktion von Metalloxidmaterial in eine Einrichtung (7) zur direkten Reduktion transferiert wird, um das Metalloxidmaterial (5) zu laden, das Wärmeenergie hält, die aus einem Herstellungswärmeprozess der Einheit (3) zur Produktion von Metalloxidmaterial stammt, wobei die Einrichtung (7) zur direkten Reduktion zur Einführung eines Reduktionsmittels (6, 31) konfiguriert ist, das dazu ausgelegt ist, mit dem Metalloxidmaterial (5), das Wärmeenergie hält, zu reagieren, wobei das Reduktionsmittel ein Wasserstoffgas (6) umfasst, das durch eine Elektrolyseeinheit (19) generiert wird, wobei das Verfahren den Schritt des Spaltens von Wasser (w) in das Wasserstoffgas (6) und in ein Sauerstoffgas (10) umfasst; wobei das Verfahren die folgenden Schritte umfasst: Transferieren des Sauerstoffgases (10) zu der Einheit (3) zur Produktion von Metalloxidmaterial zum Produzieren des Metalloxidmaterials (5);
- Produzieren des Metalloxidmaterials (5);
- Laden des Metalloxidmaterials (5), das Wärmeenergie hält, in die Einrichtung (7) zur direkten Reduktion;
- Einführen des Reduktionsmittels (6, 31) in die Einrichtung (7) zur direkten Reduktion;
- Reduzieren des Metalloxidmaterials (5) zu einem reduzierten Metallmaterial (RM) unter Verwendung der Wärmeenergie des Metalloxidmaterials (5), um das eingeführte Reduktionsmittel (6, 31) zum Erzielen einer chemischen Reaktion zu erwärmen oder weiter zu erwärmen; und
- Ablassen des reduzierten Metallmaterials aus der Einrichtung (7) zur direkten Reduktion.

2. Verfahren nach Anspruch 1, wobei das Metalloxidmaterial (5), das Wärmeenergie hält, aus der Einheit (3) zur Produktion von Metalloxidmaterial direkt in die Einrichtung (7) zur direkten Reduktion transferiert wird, um die Heizwärme des Metalloxidmaterials (3) zu bewahren.

3. Verfahren nach Anspruch 1 oder 2, wobei die Produktion des Metalloxidmaterials (5) die folgenden Schritte umfasst; Zermahlen von Metallerzkörpern; Trennen von Metallerzpartikeln; Produzieren eines Metallerzgemisches (24) der Metallerzpartikel; Härten des Metallerzgemisches (24).

4. Verfahren nach Anspruch 3, wobei der Schritt des Härtens des Metallerzgemisches (24) Oxidierung des Metallerzgemisches (24) und/oder Sintern des Metallerzgemisches (24) umfasst.

5. Verfahren nach Anspruch 4, wobei das Metallerzgemisch (24) ein Eisenerzgemisch umfasst und der Schritt des Vorwärmens und/oder Erwärmens des Eisenerzgemisches Oxidation von Magnetiterz zu Hämatiterz umfasst.

6. Verfahren nach Anspruch 3 oder 4, wobei die Einrichtung zur direkten Reduktion mit einer hitzebeständigen Versorgungsapparatur versehen ist, umfassend eine Transfervorrichtung, die elektrisch an die Steuerschaltung gekoppelt ist, welche dazu ausgelegt ist, die Laderate zum Laden des Metalloxidmaterials, das Wärmeenergie hält, in die Einrichtung zur Reduktion zu steuern.

7. Verfahren nach einem der vorhergehenden Ansprüche, wobei das Sauerstoffgas (10) zu der Einheit (3) zur Produktion von Metalloxidmaterial transferiert wird, um in einem Schritt des Härtens des Metallerzgemisches (24) verwendet zu werden.

8. Verfahren nach einem der vorhergehenden Ansprüche, wobei das Verfahren einen Schritt des Transferierens von überschüssiger Wärme von der Elektrolyseeinheit (19) zu der Einheit (3) zur Produktion von Metalloxidmaterial umfasst.

9. Verfahren nach einem der vorhergehenden Ansprüche, wobei das Verfahren einen Schritt des Transferierens von überschüssiger Wärme von der Einrichtung (7) zur direkten Reduktion zu der Einheit (3) zur Produktion von Metalloxidmaterial umfasst.

10. Verfahren nach einem der vorhergehenden Ansprüche, wobei ein Abfallreduktionsfluid (8) von der Einrichtung (7) zur direkten Reduktion zu der Einheit (3) zur Produktion von Metalloxidmaterial transferiert wird, wobei das Abfallreduktionsfluid (8) des Reduktionsmittels (6) für den Herstellungswärmeprozess, der durch die Einheit (3) zur Produktion von Metalloxidmaterial bereitgestellt wird, verwendet wird.

11. Verfahren nach Anspruch 10, wobei das Abfallreduktionsfluid (8) zum Vorwärmen und/oder Erwärmen des Metallerzgemisches (24) und/oder zur Oxidierung des Metallerzgemisches (24) und/oder für einen Schritt zum Sintern des Metallerzgemisches (24) verwendet wird.

12. Verfahren nach Anspruch 10 oder 11, wobei das Abfallreduktionsfluid (8) Wasserstoffgas umfasst.

13. Verfahren nach einem der vorhergehenden Ansprüche, wobei der Herstellungswärmeprozess Vorwärmen des Metalloxidmaterials (5) zum Bereitstellen des Metalloxidmaterials (5), das Wärmeenergie hält, mittels einer Apparatur (203, 207) zum Vorwärmen von Metalloxidmaterial umfasst.

14. Konfiguration (1) zur Produktion von Metallmaterial, die zur Herstellung von reduziertem Metallmaterial (RM) ausgelegt ist,
- eine Einheit (3) zur Produktion von Metalloxidmaterial, die zur Produktion eines Metalloxidmaterials (5), das Wärmeenergie hält, durch einen Herstellungswärmeprozess konfiguriert ist;
- eine Einrichtung (7) zur direkten Reduktion, umfassend:
- eine Einlassvorrichtung (9) zum Laden von Metalloxidmaterial, die zum Transferieren des Metalloxidmaterials (5) aus der Einheit (3) zur Produktion von Metalloxidmaterial in die Einrichtung (7) zur direkten Reduktion konfiguriert ist;
- eine Einlassvorrichtung (11) für Reduktionsmittelfluid, die zum Einführen eines Reduktionsmittels, das dazu ausgelegt ist, mit dem Metalloxidmaterial (5) zu reagieren, in die Einrichtung (7) zur direkten Reduktion konfiguriert ist;
- eine Auslassvorrichtung (13) für Abfallreduktionsfluid, die zum Ablassen von Abfallreduktionsfluid (8) aus der Einrichtung (7) zur direkten Reduktion konfiguriert ist;
- eine Auslassvorrichtung (15) für reduziertes Metallmaterial, die zum Ablassen des reduzierten Metallmaterials aus der Einrichtung (7) zur direkten Reduktion konfiguriert ist; wobei die Konfiguration (1) Folgendes umfasst:
- die Einrichtung (7) zur direkten Reduktion ist dazu konfiguriert, eine Reduktion des Metalloxidmaterials (5) zu reduziertem Metallmaterial unter Verwendung von Wärmeenergie des Metalloxidmaterials (5) bereitzustellen, wobei die Wärmeenergie aus dem Herstellungswärmeprozess stammt, um das Reduktionsmittel (6, 31) zum Erzielen einer chemischen Reaktion zwischen dem Metalloxidmaterial (5) und dem Reduktionsmittel (6), das die Reduktion bereitstellt, zu erwärmen oder weiter zu erwärmen; wobei die Konfiguration (1) zur Produktion von Metallmaterial ferner Folgendes umfasst;
- eine Elektrolyseeinheit (19), die dazu konfiguriert ist, Wasser (w) in ein Wasserstoffgas (6) und in ein Sauerstoffgas (10) zu spalten;
- eine Transfervorrichtung (44', 44") für Wasserstoffgas, die dazu konfiguriert ist, Wasserstoffgas (6) aus der Elektrolyseeinheit (19) zu der Einlassvorrichtung (11) für Reduktionsmittelfluid zu transferieren; und
- die Konfiguration (1) zur Produktion von Metallmaterial eine Sauerstoffgastransfervorrichtung (66', 66") umfasst, die dazu konfiguriert ist, das Sauerstoffgas (10) aus der Elektrolyseeinheit (19) zu der Einheit (3) zur Produktion von Metalloxidmaterial zu transferieren.

15. Konfiguration (1) zur Produktion von Metallmaterial nach Anspruch 14, wobei die Einrichtung (7) zur direkten Reduktion in die Einheit (3) zur Produktion von Metalloxidmaterial integriert ist.

16. Konfiguration (1) zur Produktion von Metallmaterial nach Anspruch 14, wobei die Transfervorrichtung (44', 44") für Wasserstoffgas ein Fluidtransportvehikel und/oder eine Schlauchanordnung umfasst.

17. Konfiguration (1) zur Produktion von Metallmaterial nach einem der vorhergehenden Ansprüche, wobei die Einrichtung (7) zur direkten Reduktion in die Elektrolyseeinheit (19) integriert ist.

18. Konfiguration (1) zur Produktion von Metallmaterial nach einem der vorhergehenden Ansprüche, wobei eine Härtungsapparatur (22) zur Oxidierung des Metallerzgemisches (24) konfiguriert ist.

19. Konfiguration (1) zur Produktion von Metallmaterial nach einem der Ansprüche 14 bis 18, wobei die Einlassvorrichtung (9) zum Laden von Metalloxidmaterial zum Transferieren des Metalloxidmaterials (5) aus der Einheit (3) zur Produktion von Metalloxidmaterial direkt in die Einrichtung (7) zur direkten Reduktion konfiguriert ist.

20. Konfiguration (1) zur Produktion von Metallmaterial nach einem der Ansprüche 14 bis 19, wobei die Konfiguration (1) zur Produktion von Metallmaterial eine Wärmetauscherapparatur (79, 89) umfasst, die über die Auslassvorrichtung (13) für Abfallreduktionsfluid an die Einrichtung (7) zur direkten Reduktion gekoppelt ist, wobei die Wärmetauscherapparatur (79, 89) dazu konfiguriert ist, Wärme aus einem Abfallreduktionsfluid (8) des Reduktionsmittels (6, 31) zu transferieren, wobei das Abfallreduktionsfluid (8) aus der Einrichtung (7) zur direkten Reduktion der Einheit (3) zur Produktion von Metalloxidmaterial und/oder der Elektrolyseeinheit (19) nach Anspruch 14 zugeführt wird, um ein Energieträgerfluid (AG), das durch die Wärmetauscherapparatur (79, 89) fließt, zu erwärmen.

21. Konfiguration (1) zur Produktion von Metallmaterial nach einem der Ansprüche 14 bis 20, wobei die Konfiguration (1) zur Produktion von Metallmaterial eine Vorrichtung (HH) zum Erwärmen von Reduktionsmittel umfasst, die zum Erwärmen des Reduktionsmittels, bevor es in die Einrichtung (7) zur direkten Reduktion eingeführt wird, konfiguriert ist.

22. Konfiguration (1) zur Produktion von Metallmaterial nach einem der Ansprüche 14 bis 21, wobei die Konfiguration (1) zur Produktion von Metallmaterial eine Steuerschaltung (50) umfasst, die dazu ausgelegt ist, einen beliebigen der Verfahrensschritte nach Anspruch 1 bis 12 zu steuern.

23. Verfahren nach Anspruch 1, wobei das Wasserstoffgas (6), bevor es in die Einrichtung (7) zur direkten Reduktion eingeführt wird, in einem Wasserstoffspeicher- und -puffertank (26') gespeichert wird und/oder der Sauerstoff (10), der durch die Elektrolyseeinheit (19) produziert wird, bevor der Sauerstoff (10) der Einheit zur Produktion von Metalloxidmaterial zugeführt wird, in einem Sauerstoffspeichertank (26") gespeichert wird.

24. Konfiguration (1) zur Produktion von Metallmaterial nach Anspruch 14 bis 22, wobei die Einrichtung (7) zur direkten Reduktion dazu konfiguriert ist, ein kohlenstofffreies, reduziertes Metallmaterial und/oder ein kohlenstoffhaltiges, reduziertes Metallmaterial (CRM) zu produzieren.

25. Konfiguration (1) zur Produktion von Metallmaterial nach Anspruch 23, wobei das kohlenstoffhaltige, reduzierte Metallmaterial (CRM) durch einen separaten Aufkohlungsreaktor (248) erlangt wird, der an die Einrichtung (7) zur direkten Reduktion und/oder eine separate Aufkohlungszone (249) der Einrichtung (7) zur direkten Reduktion und/oder ein Aufkohlungsvolumen (250) des Inneren der Einrichtung (7) zur direkten Reduktion gekoppelt ist.

26. Datenmedium, das ein Datenprogramm (P) speichert, welches zum Veranlassen, dass die Konfiguration (1) zur Produktion von Metallmaterial nach Anspruch 22 eine automatische oder halbautomische Herstellung von reduziertem Metallmaterial (RM) ausführt, programmiert ist, wobei das Datenprogramm (P) einen Programmcode umfasst, wobei das Datenmedium auf einem Computer der Steuerschaltung (50) zum Veranlassen, dass die Steuerschaltung (50) die folgenden Verfahrensschritte durchführt, lesbar ist:
- Produzieren des Metalloxidmaterials (5);
- Laden des Metalloxidmaterials (5), das Wärmeenergie hält, in die Einrichtung (7) zur direkten Reduktion;
- Einführen des Reduktionsmittels (6, 31) in die Einrichtung (7) zur direkten Reduktion;
- Reduzieren des Metalloxidmaterials (5) zu einem reduzierten Metallmaterial (RM) unter Verwendung der Wärmeenergie des Metalloxidmaterials (5), um das eingeführte Reduktionsmittel (6, 31) zum Erzielen einer chemischen Reaktion zu erwärmen oder weiter zu erwärmen; und
- Ablassen des reduzierten Metallmaterials aus der Einrichtung (7) zur direkten Reduktion.

27. Konfiguration (1) zur Produktion von Metallmaterial nach Anspruch 14, wobei die Einrichtung (7) zur direkten Reduktion dazu konfiguriert ist, an eine Einheit (3) zur Produktion von Metalloxidmaterial gekoppelt zu sein, wobei Laden eines Metalloxidmaterials (5), das Wärmeenergie hält, die aus einem Herstellungswärmeprozess stammt, der zum Produzieren des Metalloxidmaterials (5) ausgelegt ist, in die Einrichtung (7) zur direkten Reduktion ermöglicht wird, und die Einrichtung (7) zur direkten Reduktion zum Aufnehmen eines Reduktionsmittels (6, 31) zum Bereitstellen einer chemischen Reaktion konfiguriert ist.

28. Konfiguration (1) zur Produktion von Metallmaterial nach Anspruch 27, wobei die Einrichtung (7) zur direkten Reduktion Folgendes umfasst; eine Einlassvorrichtung (9) zum Laden von Metalloxidmaterial, die zum Transferieren des Metalloxidmaterials (5) aus der Einheit (3) zur Produktion von Metalloxidmaterial in die Einrichtung (7) zur direkten Reduktion konfiguriert ist; eine Einlassvorrichtung (11) für Reduktionsmittelfluid, die zum Einführen eines Reduktionsmittels (6, 31), das dazu ausgelegt ist, mit dem Metalloxidmaterial (5) gemäß einer chemischen Reaktion zu reagieren, in die Einrichtung (7) zur direkten Reduktion konfiguriert ist; eine Auslassvorrichtung (13) für Abfallreduktionsfluid, die zum Ablassen von Abfallreduktionsfluid (8) aus der Einrichtung (7) zur direkten Reduktion konfiguriert ist; und eine Auslassvorrichtung (15) für reduziertes Metallmaterial, die zum Ablassen des reduzierten Metallmaterials (RM) aus der Einrichtung (7) zur direkten Reduktion konfiguriert ist.

29. Konfiguration (1) zur Produktion von Metallmaterial nach einem der Ansprüche 27 bis 28, wobei die Einlassvorrichtung (11) für Reduktionsmittelfluid einer Elektrolyseeinheit (19), die zum Spalten von Wasser in das Reduktionsmittel (6, 31) konfiguriert ist, zugeordnet und/oder daran gekoppelt ist.

30. Konfiguration (1) zur Produktion von Metallmaterial nach einem der Ansprüche 27 bis 29, wobei das Reduktionsmittel ein Wasserstoffgas (6) umfasst.

31. Konfiguration (1) zur Produktion von Metallmaterial nach Anspruch 14, wobei die Einheit (3) zur Produktion von Metalloxidmaterial dazu konfiguriert ist, ein Metalloxidmaterial (5) aus einem Metallerzgemisch (24) zu produzieren, wobei das produzierte Metalloxidmaterial (5) Wärmeenergie hält, die aus einem Herstellungswärmeprozess der Einheit (3) zur Produktion von Metalloxidmaterial stammt, und die Einheit (3) zur Produktion des Metalloxidmaterials dazu konfiguriert ist, das Metalloxidmaterial (5), das Wärmeenergie hält, zu einer Einrichtung (7) zur direkten Reduktion zu transferieren, die dazu konfiguriert ist, das Metalloxidmaterial (5), das Wärmeenergie hält, zu reduziertem Metallmaterial (RM) durch eine chemische Reaktion zwischen dem Metalloxidmaterial und einem Reduktionsmittel (6, 31), das in die Einrichtung (7) zur direkten Reduktion eingeführt wird, zu reduzieren.

32. Konfiguration (1) zur Produktion von Metallmaterial nach Anspruch 31, wobei die Einheit (3) zur Produktion von Metalloxidmaterial zum Erwärmen des Metallerzgemisches (24) mittels überschüssiger Wärme, die aus der Einrichtung (7) zur direkten Reduktion zu der Einheit (3) zur Produktion von Metalloxidmaterial transferiert wird, konfiguriert ist.

33. Konfiguration (1) zur Produktion von Metallmaterial nach Anspruch 31 oder 32, wobei die Einheit (3) zur Produktion von Metalloxidmaterial eine Sauerstoffgasablassvorrichtung (A) umfasst, die dazu konfiguriert ist, Sauerstoffgas (10) in eine Härtungsapparatur (22) abzulassen, wobei das Sauerstoffgas (10) aus einer Elektrolyseeinheit (19) der Einheit (3) zur Produktion von Metalloxidmaterial zum Oxidieren des Metallerzgemisches (24) und/oder zum Erwärmen des Metallerzgemisches durch einen Verbrennungsprozess zugeführt wird.

34. Konfiguration (1) zur Produktion von Metallmaterial nach einem der Ansprüche 31 bis 33, wobei die Einheit (3) zur Produktion von Metalloxidmaterial eine Wasserstoffgasablassvorrichtung (B) umfasst, die dazu konfiguriert ist, ein Prozessgas (PG), das durch die Einheit (3) zur Produktion von Metalloxidmaterial verwendet wird, zu erwärmen.

35. Konfiguration (1) zur Produktion von Metallmaterial nach einem der Ansprüche 31 bis 34, wobei die Einheit (3) zur Produktion von Metalloxidmaterial eine Wasserstoffgasablassvorrichtung umfasst, die zum Bereitstellen von Erwärmen des Metallerzgemisches (24) konfiguriert ist.

36. Konfiguration (1) zur Produktion von Metallmaterial nach Anspruch 31, wobei die Einheit (3) zur Produktion von Metalloxidmaterial eine Apparatur (203, 207) zum Vorwärmen von Metalloxidmaterial umfasst, die dazu konfiguriert ist, mittels eines Herstellungswärmeprozesses das Metalloxidmaterial zum Produzieren eines Metalloxidmaterials, das die Wärmeenergie hält, vorzuwärmen.

37. Konfiguration (1) zur Produktion von Metallmaterial nach Anspruch 14, wobei
- die Konfiguration (1) zur Produktion von Metallmaterial mit einer Zuführanordnung zum Bereitstellen eines mit Sauerstoff angereicherten Prozessgases (OE), das während eines Oxidations- und/oder Sinterprozesses eines Herstellungswärmeprozesses hohen Sauerstoffdruck beibehält, der zum Produzieren eines Metalloxidmaterials (5) ausgelegt ist, versehen ist; wobei der Herstellungswärmeprozess einen Schritt des Härtens eines Metallerzgemisches zum Produzieren des Metalloxidmaterials (5) umfasst;
- eine Einheit (3) zur Produktion von Metalloxidmaterial der Konfiguration (1) zur Produktion von Metallmaterial eine Ausstoßvorrichtung für mit Sauerstoff angereichertem Prozessgas (OEE) umfasst, die zum Einführen des mit Sauerstoff angereicherten Prozessgases (OE) in eine Härtungsapparatur (22) der Einheit (3) zur Produktion von Metalloxidmaterial konfiguriert ist; und
- die Konfiguration (1) zur Produktion von Metallmaterial eine Sauerstoffgastransfervorrichtung (66', 66") umfasst, die dazu konfiguriert ist, ein Sauerstoffgas (10) aus einer Elektrolyseeinheit (19) zu der Einheit (3) zur Produktion von Metalloxidmaterial zu transferieren.

## Revendications

1. Procédé de réduction d'un matériau d'oxyde métallique (5), produit par une unité de production de matériau d'oxyde métallique (3), le matériau d'oxyde métallique (5) étant transféré de l'unité de production de matériau d'oxyde métallique (3) dans une installation de réduction directe (7) pour le chargement du matériau d'oxyde métallique (5) détenant de l'énergie thermique qui provient d'un processus thermique de fabrication de l'unité de production de matériau d'oxyde métallique (3), l'installation de réduction directe (7) est configurée pour l'introduction d'un agent réducteur (6, 31) adapté pour réagir avec le matériau d'oxyde métallique (5) détenant de l'énergie thermique, dans lequel l'agent réducteur comprend un gaz hydrogène (6) généré par une unité d'électrolyse (19), le procédé comprend l'étape de décomposition de l'eau (w) en ledit gaz hydrogène (6) et en un gaz oxygène (10) ; le procédé comprend les étapes de : le transfert du gaz oxygène (10) vers l'unité de production de matériau d'oxyde métallique (3) pour la production du matériau d'oxyde métallique (5) ;
- la production dudit matériau d'oxyde métallique (5) ;
- le chargement dudit matériau d'oxyde métallique (5), détenant de l'énergie thermique, vers l'installation de réduction directe (7) ;
- l'introduction de l'agent réducteur (6, 31) vers l'installation de réduction directe (7) ;
- la réduction dudit matériau d'oxyde métallique (5) en un matériau métallique réduit (RM) en utilisant ladite énergie thermique du matériau d'oxyde métallique (5) pour chauffer ou chauffer davantage l'agent réducteur (6, 31) introduit pour obtenir une réaction chimique ; et
- le déchargement du matériau métallique réduit à partir de l'installation de réduction directe (7).

2. Procédé selon la revendication 1, **dans lequel** le matériau d'oxyde métallique (5) détenant de l'énergie thermique est transféré de l'unité de production de matériau d'oxyde métallique (3) directement vers l'installation de réduction directe (7) afin de préserver la chaleur thermique du matériau d'oxyde métallique (3).

3. Procédé selon la revendication 1 ou 2, **dans lequel** la production dudit matériau d'oxyde métallique (5) comprend les étapes suivantes ; le broyage de corps de minerai métallique ; la séparation de particules de minerai métallique ; la production d'un mélange de minerai métallique (24) desdites particules de minerai métallique ; le durcissement du mélange de minerai métallique (24).

4. Procédé selon la revendication 3, **dans lequel** l'étape de durcissement du mélange de minerai métallique (24) comprend l'oxydation du mélange de minerai métallique (24) et/ou le frittage du mélange de minerai métallique (24).

5. Procédé selon la revendication 4, **dans lequel** le mélange de minerai métallique (24) comprend un mélange de minerai de fer et l'étape de préchauffage et/ou de chauffage du mélange de minerai de fer comprend l'oxydation du minerai de magnétite en minerai d'hématite.

6. Procédé selon la revendication 3 ou 4, **dans lequel** l'installation de réduction directe est pourvue d'un appareil d'alimentation résistant à la chaleur, comprenant un dispositif de transfert couplé électriquement à la circuiterie de commande adapté pour commander le taux de chargement pour le chargement du matériau d'oxyde métallique détenant de l'énergie thermique dans l'installation de réduction.

7. Procédé selon l'une quelconque des revendications précédentes, **dans lequel** le gaz oxygène (10) est transféré vers l'unité de production de matériau d'oxyde métallique (3) pour être utilisé dans une étape de durcissement du mélange de minerai métallique (24).

8. Procédé selon l'une quelconque des revendications précédentes, **dans lequel** le procédé comprend une étape de transfert de la chaleur excédentaire de l'unité d'électrolyse (19) vers l'unité de production de matériau d'oxyde métallique (3).

9. Procédé selon l'une quelconque des revendications précédentes, **dans lequel** le procédé comprend une étape de transfert de la chaleur excédentaire de l'installation de réduction directe (7) vers l'unité de production de matériau d'oxyde métallique (3).

10. Procédé selon l'une quelconque des revendications précédentes, **dans lequel** un fluide de réduction résiduel (8) est transféré de l'installation de réduction directe (7) vers l'unité de production de matériau d'oxyde métallique (3), lequel fluide de réduction résiduel (8) de l'agent réducteur (6) étant utilisé pour le processus thermique de fabrication fourni par l'unité de production de matériau d'oxyde métallique (3).

11. Procédé selon la revendication 10, **dans lequel** le fluide de réduction résiduel (8) étant utilisé pour le préchauffage et/ou le chauffage du mélange de minerai métallique (24) et/ou l'oxydation du mélange de minerai métallique (24) et/ou une étape de frittage du mélange de minerai métallique (24).

12. Procédé selon la revendication 10 ou 11, **dans lequel** le fluide de réduction résiduel (8) comprend du gaz hydrogène.

13. Procédé selon l'une quelconque des revendications précédentes, **dans lequel** le processus thermique de fabrication comprend le préchauffage du matériau d'oxyde métallique (5) pour la fourniture du matériau d'oxyde métallique (5) détenant de l'énergie thermique au moyen d'un appareil de préchauffage de matériau d'oxyde métallique (203, 207).

14. Configuration de production de matériau métallique (1) adaptée pour la fabrication de matériau métallique réduit (RM),
- une unité de production de matériau d'oxyde métallique (3) configurée pour la production d'un matériau d'oxyde métallique (5) détenant de l'énergie thermique par un processus thermique de fabrication ;
- une installation de réduction directe (7) comprenant :
- un dispositif d'entrée de chargement de matériau d'oxyde métallique (9), qui est configuré pour le transfert du matériau d'oxyde métallique (5) de l'unité de production de matériau d'oxyde métallique (3) dans l'installation de réduction directe (7) ;
- un dispositif d'entrée de fluide d'agent réducteur (11) configuré pour l'introduction d'un agent réducteur, qui est adapté pour réagir avec le matériau d'oxyde métallique (5), dans l'installation de réduction directe (7) ;
- un dispositif de sortie de fluide de réduction résiduel (13) configuré pour le déchargement de fluide de réduction résiduel (8) de l'installation de réduction directe (7) ;
- un dispositif de sortie de matériau métallique réduit (15) configuré pour le déchargement du matériau métallique réduit de l'installation de réduction directe (7) ; la configuration (1) comprend :
- l'installation de réduction directe (7) est configurée pour fournir la réduction du matériau d'oxyde métallique (5) en matériau métallique réduit en utilisant l'énergie thermique du matériau d'oxyde métallique (5), laquelle énergie thermique provient du processus thermique de fabrication, pour chauffer ou chauffer davantage l'agent réducteur (6, 31) pour l'obtention d'une réaction chimique entre le matériau d'oxyde métallique (5) et l'agent réducteur (6) fournissant ladite réduction ;
la configuration de production de matériau métallique (1) comprend en outre ;
- une unité d'électrolyse (19) configurée pour décomposer l'eau (w) en un gaz hydrogène (6) et en un gaz oxygène (10) ;
- un dispositif de transfert de gaz hydrogène (44', 44") configuré pour transférer le gaz hydrogène (6) de l'unité d'électrolyse (19) vers le dispositif d'entrée de fluide d'agent réducteur (11) ; et
- la configuration de production de matériau métallique (1) comprend un dispositif de transfert de gaz oxygène (66', 66") configuré pour transférer le gaz oxygène (10) de l'unité d'électrolyse (19) vers l'unité de production de matériau d'oxyde métallique (3).

15. Configuration de production de matériau métallique (1) selon la revendication 14, **dans laquelle** l'installation de réduction directe (7) est intégrée à l'unité de production de matériau d'oxyde métallique (3).

16. Configuration de production de matériau métallique (1) selon la revendication 14, **dans laquelle** le dispositif de transfert de gaz hydrogène (44', 44") comprend un véhicule de transport de fluide et/ou un agencement de tuyau souple.

17. Configuration de production de matériau métallique (1) selon l'une quelconque des revendications précédentes, **dans laquelle** l'installation de réduction directe (7) est intégrée à l'unité d'électrolyse (19).

18. Configuration de production de matériau métallique (1) selon l'une quelconque des revendications précédentes, **dans laquelle** un appareil de durcissement (22) est configuré pour l'oxydation du mélange de minerai métallique (24).

19. Configuration de production de matériau métallique (1) selon l'une quelconque des revendications 14 à 18, **dans laquelle** le dispositif d'entrée de chargement de matériau d'oxyde métallique (9) est configuré pour le transfert du matériau d'oxyde métallique (5) de l'unité de production de matériau d'oxyde métallique (3) directement dans l'installation de réduction directe (7).

20. Configuration de production de matériau métallique (1) selon l'une quelconque des revendications 14 à 19, **dans laquelle** la configuration de production de matériau métallique (1) comprend un appareil échangeur de chaleur (79, 89) couplé à l'installation de réduction directe (7) par l'intermédiaire du dispositif de sortie de fluide de réduction résiduel (13), l'appareil échangeur de chaleur (79, 89) est configuré pour transférer la chaleur d'un fluide de réduction résiduel (8) de l'agent réducteur (6, 31), lequel fluide de réduction résiduel (8) est alimenté de l'installation de réduction directe (7) à l'unité de production de matériau d'oxyde métallique (3) et/ou à l'unité d'électrolyse (19) selon la revendication 14, pour chauffer un fluide porteur d'énergie (AG) passant à travers l'appareil échangeur de chaleur (79, 89).

21. Configuration de production de matériau métallique (1) selon l'une quelconque des revendications 14 à 20, **dans laquelle** la configuration de production de matériau métallique (1) comprend un dispositif de chauffage d'agent réducteur (HH) configuré pour le chauffage de l'agent réducteur avant d'être introduit dans l'installation de réduction directe (7).

22. Configuration de production de matériau métallique (1) selon l'une quelconque des revendications 14 à 21, **dans laquelle** la configuration de production de matériau métallique (1) comprend une circuiterie de commande (50) adaptée pour commander l'une quelconque des étapes de procédé selon les revendications 1 à 12.

23. Procédé selon la revendication 1, **dans lequel** le gaz hydrogène (6), avant d'être introduit dans l'installation de réduction directe (7), est stocké dans un réservoir de stockage et tampon d'hydrogène (26') et/ou l'oxygène (10) produit par l'unité d'électrolyse (19), avant l'alimentation de l'oxygène (10) à l'unité de production de matériau d'oxyde métallique, est stocké dans un réservoir de stockage d'oxygène (26").

24. Configuration de production de matériau métallique (1) selon les revendications 14 à 22, **dans laquelle** l'installation de réduction directe (7) est configurée pour produire un matériau métallique réduit sans carbone et/ou un matériau métallique réduit contenant du carbone (CRM).

25. Configuration de production de matériau métallique (1) selon la revendication 23, **dans laquelle** le matériau métallique réduit contenant du carbone (CRM) est obtenu par un réacteur de carburation séparé (248) couplé à l'installation de réduction directe (7) et/ou une zone de carburation séparée (249) de l'installation de réduction directe (7) et/ou un volume de carburation (250) de l'intérieur de l'installation de réduction directe (7).

26. Support de données stockant un programme de données (P), programmé pour amener la configuration de production de matériau métallique (1) selon la revendication 22 à exécuter une fabrication automatique ou semi-automatique de matériau métallique réduit (RM), dans lequel ledit programme de données (P) comprend un code de programme, le support de données est lisible sur un ordinateur de la circuiterie de commande (50), pour amener la circuiterie de commande (50) à réaliser les étapes de procédé de :
- la production dudit matériau d'oxyde métallique (5) ;
- le chargement dudit matériau d'oxyde métallique (5), détenant de l'énergie thermique, vers l'installation de réduction directe (7) ;
- l'introduction de l'agent réducteur (6, 31) vers l'installation de réduction directe (7) ;
- la réduction dudit matériau d'oxyde métallique (5) en un matériau métallique réduit (RM) en utilisant ladite énergie thermique du matériau d'oxyde métallique (5) pour chauffer ou chauffer davantage l'agent réducteur (6, 31) introduit pour obtenir une réaction chimique ; et
- le déchargement du matériau métallique réduit à partir de l'installation de réduction directe (7).

27. Configuration de production de matériau métallique (1) selon la revendication 14, dans laquelle l'installation de réduction directe (7) est configurée pour être couplée à une unité de production de matériau d'oxyde métallique (3), permettant le chargement d'un matériau d'oxyde métallique (5), détenant de l'énergie thermique qui provient d'un processus thermique de fabrication adapté pour la production du matériau d'oxyde métallique (5), dans l'installation de réduction directe (7), et l'installation de réduction directe (7) est configurée pour la réception d'un agent réducteur (6, 31) pour la fourniture d'une réaction chimique.

28. Configuration de production de matériau métallique (1) selon la revendication 27, **dans laquelle** l'installation de réduction directe (7) comprend ; un dispositif d'entrée de chargement de matériau d'oxyde métallique (9), qui est configuré pour le transfert du matériau d'oxyde métallique (5) de l'unité de production de matériau d'oxyde métallique (3) dans l'installation de réduction directe (7) ; un dispositif d'entrée de fluide d'agent réducteur (11) configuré pour l'introduction d'un agent réducteur (6, 31), qui est adapté pour réagir avec le matériau d'oxyde métallique (5) selon une réaction chimique, dans l'installation de réduction directe (7) ; un dispositif de sortie de fluide de réduction résiduel (13) configuré pour le déchargement de fluide de réduction résiduel (8) de l'installation de réduction directe (7) ; et un dispositif de sortie de matériau métallique réduit (15) configuré pour le déchargement du matériau métallique réduit (RM) de l'installation de réduction directe (7).

29. Configuration de production de matériau métallique (1) selon l'une quelconque des revendications 27 à 28, **dans laquelle** le dispositif d'entrée de fluide d'agent réducteur (11) est associé à et/ou couplé à une unité d'électrolyse (19) configurée pour décomposer l'eau en ledit agent réducteur (6, 31).

30. Configuration de production de matériau métallique (1) selon l'une quelconque des revendications 27 à 29, **dans laquelle** l'agent réducteur comprend un gaz hydrogène (6).

31. Configuration de production de matériau métallique (1) selon la revendication 14, dans laquelle l'unité de production de matériau d'oxyde métallique (3) est configurée pour produire un matériau d'oxyde métallique (5) à partir d'un mélange de minerai métallique (24), **dans laquelle** le matériau d'oxyde métallique produit (5) détient de l'énergie thermique qui provient d'un processus thermique de fabrication de l'unité de production de matériau d'oxyde métallique (3), et l'unité de production de matériau d'oxyde métallique (3) est configurée pour transférer le matériau d'oxyde métallique (5) détenant de l'énergie thermique vers une installation de réduction directe (7) configurée pour réduire le matériau d'oxyde métallique (5), détenant de l'énergie thermique, en matériau métallique réduit (RM) par une réaction chimique entre le matériau d'oxyde métallique et un agent réducteur (6, 31) introduit dans l'installation de réduction directe (7).

32. Configuration de production de matériau métallique (1) selon la revendication 31, **dans laquelle** l'unité de production de matériau d'oxyde métallique (3) est configurée pour le chauffage du mélange de minerai métallique (24) au moyen d'une chaleur excédentaire transférée de l'installation de réduction directe (7) à l'unité de production de matériau d'oxyde métallique (3).

33. Configuration de production de matériau métallique (1) selon la revendication 31 ou 32, **dans laquelle** l'unité de production de matériau d'oxyde métallique (3) comprend un dispositif de déchargement de gaz oxygène (A) configuré pour décharger du gaz oxygène (10) vers un appareil de durcissement (22), lequel gaz oxygène (10) est alimenté depuis une unité d'électrolyse (19) vers l'unité de production de matériau d'oxyde métallique (3) pour l'oxydation du mélange de minerai métallique (24) et/ou pour le chauffage du mélange de minerai métallique par un processus de combustion.

34. Configuration de production de matériau métallique (1) selon l'une quelconque des revendications 31 à 33, **dans laquelle** l'unité de production de matériau d'oxyde métallique (3) comprend un dispositif de déchargement de gaz hydrogène (B) configuré pour chauffer un gaz de processus (PG) étant utilisé par l'unité de production de matériau d'oxyde métallique (3).

35. Configuration de production de matériau métallique (1) selon l'une quelconque des revendications 31 à 34, **dans laquelle** l'unité de production de matériau d'oxyde métallique (3) comprend un dispositif de déchargement de gaz hydrogène configuré pour fournir le chauffage du mélange de minerai métallique (24).

36. Configuration de production de matériau métallique (1) selon la revendication 31, **dans laquelle** l'unité de production de matériau d'oxyde métallique (3) comprend un appareil de préchauffage de matériau d'oxyde métallique (203, 207) configuré pour, au moyen d'un processus thermique de fabrication, préchauffer le matériau d'oxyde métallique pour la production d'un matériau d'oxyde métallique détenant ladite énergie thermique.

37. Configuration de production de matériau métallique (1) selon la revendication 14, **dans laquelle**
- la configuration de production de matériau métallique (1) est pourvue d'un agencement d'alimentation pour la fourniture d'un gaz de processus enrichi en oxygène (OE) maintenant une pression d'oxygène élevée pendant un processus d'oxydation et/ou de frittage d'un processus thermique de fabrication, adapté pour la production d'un matériau d'oxyde métallique (5) ; dans laquelle le processus thermique de fabrication comprend une étape de durcissement d'un mélange de minerai métallique pour la production du matériau d'oxyde métallique (5) ;
- une unité de production de matériau d'oxyde métallique (3) de la configuration de production de matériau métallique (1) comprend un dispositif éjecteur de gaz de processus enrichi en oxygène (OEE) configuré pour l'introduction du gaz de processus enrichi en oxygène (OE) dans un appareil de durcissement (22) de l'unité de production de matériau d'oxyde métallique (3) ; et
- la configuration de production de matériau métallique (1) comprend un dispositif de transfert de gaz oxygène (66', 66") configuré pour transférer un gaz oxygène (10) d'une unité d'électrolyse (19) à l'unité de production de matériau d'oxyde métallique (3).
